(19) Europäisches Patentamt
European Patent Office
Office européen des brevets

(11) **EP 2 166 307 B1**

(12) **EUROPEAN PATENT SPECIFICATION**

(45) Date of publication and mention
of the grant of the patent:
**25.07.2018 Bulletin 2018/30**

(51) Int Cl.:
*G01B 21/06* *(2006.01)*    *G01B 11/04* *(2006.01)*

(21) Application number: **07828410.6**

(86) International application number:
**PCT/JP2007/068637**

(22) Date of filing: **26.09.2007**

(87) International publication number:
**WO 2009/040893 (02.04.2009 Gazette 2009/14)**

(54) **APPARATUS FOR MEASURING FEED AMOUNT OF LONG OBJECT**

VORRICHTUNG ZUR MESSUNG DER ZUFÜHRUNGSMENGE EINES LANGEN OBJEKTS

APPAREIL DE MESURE D'UNE QUANTITÉ D'AVANCEMENT D'UN OBJET LONG

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**24.03.2010 Bulletin 2010/12**

(73) Proprietor: **Mitsubishi Electric Corporation
Chiyoda-ku
Tokyo 100-8310 (JP)**

(72) Inventor: **KUNO, Kazuo
Tokyo 100-8310 (JP)**

(74) Representative: **Ilgart, Jean-Christophe et al
BREVALEX
95, rue d'Amsterdam
75378 Paris Cedex 8 (FR)**

(56) References cited:
**WO-A1-91/18261        JP-A- 54 153 060
JP-A- 54 153 060        JP-A- 56 117 101
JP-A- 56 117 101        JP-B2- 2 912 050
US-A- 4 400 882         US-A- 5 430 665
US-A1- 2003 009 894**

## Description

### Technical Field

The present invention relates to a long-object feed amount measuring apparatus for measuring a feed amount of a long object in a long object feeding apparatus in which a long object such as an electrically conductive wire, an electrical cable, each kind of hose or the like is fed in the length direction thereof.

### Background Art

A measuring roller type in which a measuring roller brought into contact with a long object is used and a feed amount measurement value is calculated on the basis of the rotation of the measuring roller, and a mark type in which plural measuring marks are put onto a long object so as to be spaced from one another and a feed amount measurement value is calculated by using these measuring marks are known as a long object feed amount measuring apparatus. According to the measuring roller type, the feed amount measurement value can be continuously calculated in accordance with the feeding of a long object. For example, when a feeding speed of the long object is controlled, the feeding speed can be continuously controlled on the basis of the feed amount measurement value.

In the measuring roller type, however, an error occurs in the feed amount measurement value due to slip between the long object and the measuring roller. Furthermore, in the case of a long object having a flexible surface such as an electrical cable or the like, deformation occurs on the surface of the long object, and an error also occurs in the feed amount measurement value due to this deformation. When unevenness exists on the surface of the long object, an error also occurs in the feed amount measurement value due to this unevenness.

The mark type feed amount measuring apparatus is disclosed in the following patent document 1. The feed amount measuring apparatus disclosed in Fig. 9 of this patent document 1 is equipped with a marking device for a long object, and first and second sensors which are in non-contact with the long object. The marking device puts a second measuring mark when a first measuring mark at the head is detected by the first sensor in accordance with feeding of a long object, and also puts a third measuring mark when the first measuring mark is detected by the second sensor. The count value of a counter is counted up every time each measuring mark subsequent to the second measuring mark is detected by the second sensor, and a feed amount measurement value is calculated on the basis of this count value.

Patent Document: JP4-188008A, particularly Fig. 9 and the description thereof

Hereunder several other prior art documents are analysed.

US 5 430 665 describes a length measuring apparatus for accurately measuring the length of a communication cable or other elongated object in the moving state and a method for the same. The preferable length measuring apparatus is a combination of a marking system and encoder system. The marking system counts the number of times a cable moves by a standard length measurement distance using that standard length measurement distance as one unit. To detect the conveyance of the cable by standard length measurement distances, a marker makes marks on the cable surface and the marks are detected by a laser switch or other sensor. The fine differences in distance between the standard length measurement distance and the mark interval, that is, the surplus lengths, are detected from the value of an encoder at the timing of detection of the marks. The length measuring apparatus body controls the marker and sensor and calculates the final distance of movement of the cable, that is, the measured distance of the cable, by adding the product of the standard length measurement distance and the count to the sum of the above-mentioned surplus lengths.

JP 2 912 050 describes a measuring apparatus which has a main body of the measuring apparatus, a display device, an input device and a marker. A first encoder, a first counter, a second encoder and second counter are provided. The first co-length measuring means is formed of the first encoder and the first counter. The second co-length measuring means is formed of the second encoder and the second counter. Furthermore, four mark detecting means, i.e., a first sensor and its ADC, a second sensor and its ADC, a third sensor and its ADC and a fourth sensor and its ADC are provided. The device which is operating normally is used, and the measurement is performed.

US 4 400 882 describes a system for accurately marking cables which employs optical devices to measure the actual distance between periodic impressions and apparatus to adjust the marking apparatus to maintain a fixed distance between such impressions.

US 2003/0009894 describes a system for inspection of wood-board thickness, in which displacement sensors are disposed at three positions with respect to a width of a wood material being conveyed thereto for measurement of the thickness thereof. A programmable controller determines the pass/fail of the board thickness based on the extent of portion having a board thickness deviated from the range of allowance extending along a conveyance direction.

JP 54153060 describes a method of measuring error in a measured length of a linear material.

JP 56117101 describes a measuring apparatus for electric wire, in which a magnetic marker and a mark sensor are respectively installed to a position near supplying drum in a driving part and a position separated from magnetic marker, for example, 10m, to the direction of wire driving. The output of mark sensor is inputted to magnetized measuring amplifier and magnetic marker is energized in every input. The output from thermometer for electric wire, thermometer for room temperature and electric wire tensiometer is inputted to processor system through corresponding digital panel meters respectively. Processor system controls visible marker on/off commands to be outputted to magnetized measuring amplifier through relay output register, preventing marking of incorrect positions.

## Disclosure of the Invention

### Problem to be solved by the Invention

In the mark type feed amount measuring apparatus, the measuring mark is detected by the sensor which is not in contact with the long object, and thus the error occurring in the measuring roller type can be eliminated. However, in the mark type, the sensor periodically detects a measuring mark in accordance with the feeding of a long object, and thus the feed amount measurement value can be calculated only periodically.

The present invention proposes an improved long-object feed amount measuring apparatus that can obtain an accurate feed amount measurement value continuously in accordance with feeding of a long object.

The present invention is more clearly defined in the following claims.

### Means of solving the Problem

A feed amount measuring apparatus according to this invention is a long-object feed amount measuring apparatus that measures a feed amount of a long object in a long-object feeding apparatus in which the long object is fed in the length direction thereof, and it comprises: a measuring roller that is in contact with the long object and rotates on the basis of feeding of the long object; a rotary encoder that successively generates a measuring pulse on the basis of the rotation of the measuring roller; a control operation unit that calculates a corrected feed amount measurement value representing the feed amount of the long object upon reception of the measuring pulse, and periodically outputs a marking instruction and an image pickup instruction on the basis of the corrected feed amount measurement value; a marking device that puts plural measuring marks onto the long object on the basis of the marking instruction so that the measuring marks are spaced from one another by predetermined mark intervals every time the control operation unit periodically outputs the marking instruction; an image pickup device that contains two cameras disposed so as to be spaced from each other by an interval along the length direction of the long object and successively and simultaneously picks up images of two measuring marks for defining each of all the mark intervals subsequently to an initialization state on the basis of the image pickup instruction every time the control operation unit periodically outputs the image pickup instruction; and an image processing unit for successively calculating a mark interval calculation value corresponding to each mark interval on the basis of the image information picked up by the image pickup device, wherein the control operation unit calculates a first feed amount measurement value of the long object on the basis of the measuring pulse subsequently to the initialization state, calculates a second feed amount measurement value of the long object on the basis of the mark interval calculation value calculated by the image processing unit, and further corrects the first feed amount measurement value with the second feed amount measurement value, thereby calculating the corrected feed amount measurement value.

### Effect of the Invention

In the feed amount measuring apparatus of this invention, subsequently to the initialization state, the control operation unit calculates the first feed amount measurement value of the long object on the basis of the measuring pulse, calculates the second feed amount measurement value of the long object on the basis of the mark interval calculation value calculated by the image processing unit, and further corrects the first feed amount measurement value on the basis of the second feed amount measurement value, thereby calculating the corrected feed amount measurement value. The first feed amount measurement value is calculated on the basis of the rotation of the measuring roller, and thus it can be continuously obtained in connection with the feeding of the long object. The second feed amount measurement value is calculated on the basis of the image information which is obtained by simultaneously picking up the images of the two measuring marks defining each of the mark intervals through the two cameras, and thus it becomes an accurate feed amount measurement value containing no slip of the measuring roller to the long object and no error caused by variation of the contact state. The corrected feed amount measurement value corrects the first feed amount measurement value on the basis of the second feed amount measurement value, and it can be continuously obtained in accordance with the feeding of the long object. In addition, an error caused by the slip of the measuring roller to the long object and the variation of the contact state is corrected on the basis of the second feed amount measurement value, so that an accurate corrected feed amount measurement value can be obtained.

Other objects, features, aspects and effects of the present invention will be further apparent from the description of some embodiments of the present invention described hereunder with reference to the drawings.

**Brief Description of the Drawings**

[Fig. 1] Fig. 1 is a construction diagram showing an embodiment 1 of a long-object feed amount measuring apparatus of the present invention.

[Fig. 2] Fig. 2 is a diagram showing the operation principle of an image processing unit according to the embodiment 1.

[Fig. 3] Fig. 3 is a timing chart showing the timings of a marking instruction, an image pickup instruction and a correct coefficient calculating instruction in the embodiment 1.

[Fig. 4] Figs. 4(a)(b)(c) are diagrams showing an initializing operation state of the embodiment 1.

[Fig. 5] Figs. 5(a)(b) are diagrams showing a normal operation state of the embodiment 1.

[Fig. 6] Fig. 6 is a graph showing examples of variations of a first feed amount measurement value, a correction coefficient and a corrected feed amount measurement in the embodiment 1.

[Fig. 7] Fig. 7 is a diagram showing the operation of an embodiment 2 of the long-object feed amount measuring apparatus according to the present invention.

[Fig. 8] Fig. 8 shows an embodiment 3 of the long-object feed amount measuring apparatus according to the present invention, and is a construction diagram showing an initial operation state of the embodiment 3.

[Fig. 9] Fig. 9 is a timing chart showing the timings of a marking instruction, an image pickup instruction and a correction coefficient calculation instruction in the embodiment 3.

[Fig. 10] is a construction diagram showing an embodiment 4 of the long-object feed amount measuring apparatus according to the present invention.

[Fig. 11] Fig. 11 is a diagram showing the operation of a marking device in an embodiment 5 of the long-object feed amount measuring device according to the present invention.

[Fig. 12] Figs. 12 (a) (b) are diagrams showing the operation of the marking device in comparison with the embodiment 5.

[Fig. 13] Fig. 13 is a construction diagram showing an embodiment 6 of the long-object feed amount measuring apparatus according to the present invention.

[Fig. 14] Fig. 14 is a construction diagram showing an embodiment 7 of the long-object feed amount measuring apparatus according to the present invention.

[Fig. 15] Fig. 15 is a construction diagram showing an embodiment 8 of the long-object feed amount measuring apparatus according to the present invention.

Best Modes for carrying out the Invention

Some embodiments according to the present invention will be described hereunder with reference to the drawings.

Embodiment 1

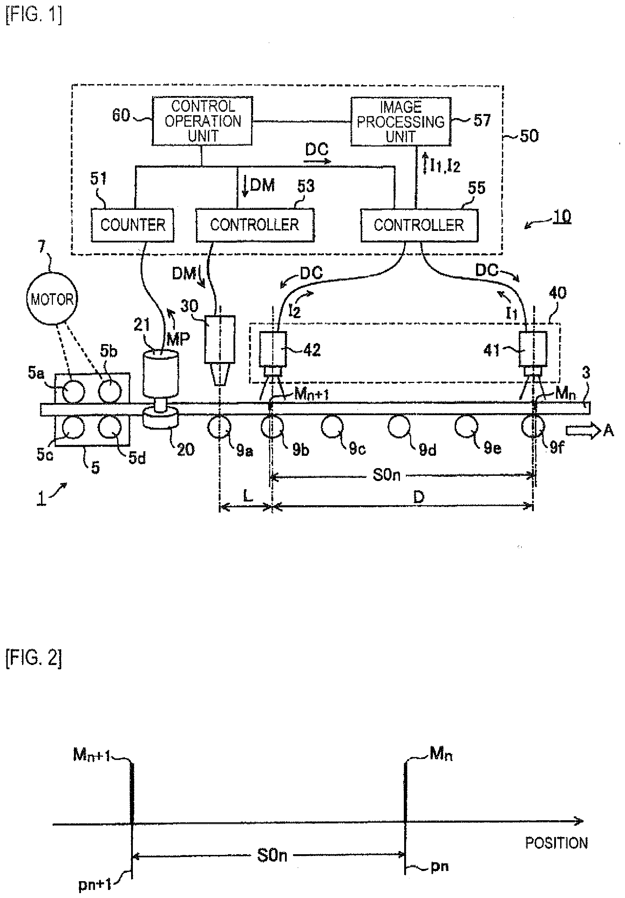

Fig. 1 is a construction diagram showing an embodiment 1 of a long-object feed amount measuring apparatus according to the present invention. The feed amount measuring apparatus 10 according to the embodiment 1 is used together with a long object feeding apparatus 1. The long object feeding apparatus 1 contains a long object 3, a driving mechanism 5, an electrical motor 7 and plural receiving rollers 9a to 9f, and feeds the long object 3 along the length direction thereof. The long object 3 is an electrical conductor, an electrical cable or each kind of hose, for example. The driving mechanism 5 has press rollers 5a and 5b and pressure-receiving rollers 5c and 5d, and the long object 3 is sandwiched between the press rollers 5a, 5b and the pressure-receiving rollers 5c, 5d. The press rollers 5a,5b presses the long object 3 against the pressure-receiving rollers 5c, 5d. The press rollers 5a,5b are driven and rotated by an electric motor 7 to feed out the long object 3. An arrow A represents a feeding direction of the long object 3. The receiving rollers 9a to 9f are arranged along the length direction of the long object 3, and it receive and guide the long object 3 fed out from the driving mechanism 5.

The feed amount measuring apparatus 10 contains a measuring roller 20, a marking device 30, an image pickup device 40 and a measurement control circuit 50. The measuring roller 20 is pressed by the long object 3, brought into contact with the surface of the long object 3 and rotated in accordance with the feeding of the long object 3. A rotary encoder 21 is appended to the measuring roller 20. This rotary encoder 21 is directly coupled to the measuring roller 20, and generates a measuring pulse MP on the basis of the rotation of the measuring roller 20. This measuring pulse MP is generated every time the measuring roller 20 rotates at a minute predetermined angle in accordance with the feeding of the elongated object 3, and transmitted to a measurement control circuit 50.

The marking device 30 is disposed so as to confront the receiving roller 9a through the long object 3. The marking device 30 is constructed by using a laser marker or an ink jet marker, for example, and puts plural measuring marks M onto the surface of the long object 3 on the basis of a marking instruction DM from the measurement control circuit 50.

The measurement control circuit 50 periodically gives the marking instruction DM to the marking device 30 in accordance with the feeding of the long object 3, that is, the measurement value based on the measuring roller 20. The marking instruction DM is given from the measurement control circuit 50 to the marking device 30 every time the long object 3 is fed by only a substantially unit feed amount S0. The marking device 30 puts the measuring mark M onto the surface of the long object 3 every time this marking instruction DM is given. As a result, plural measuring marks M are given to the long object 3 so as to be mutually spaced from one another by a predetermined mark interval S0. The plural mark intervals S0 are substantially equal to the unit feed amount S0. Fig. 1 shows two adjacent measuring marks $M_n$, $M_{n+1}$ in the plural measuring marks M put by the marking device 30. The mark interval between the measuring marks $M_n$ and $M_{n+1}$ is represented by $S0_n$. The measuring marks $M_n$, $M_{n+1}$ are located at both the ends of the mark interval $S0_n$. Here, n in $M_n$, $M_{n+1}$ represents a positive integer, and $M_n$, $M_{n+1}$ corresponds to two adjacent measuring marks in all the measuring marks M.

The image pickup device 40 is disposed at the downstream side of the marking device 30 of the measuring mark with respect to the feed direction A of the long object 3. This image pickup device 40 contains first and second cameras 41 and 42. The first and second cameras 41 and 42 are constructed by using CCD cameras, for example, and they are disposed so as to face the long object 3 through a gap so that they are not in contact with the long object 3.

The second camera 42 is disposed at the downstream side of the marking device 30 with respect to the feed direction A of the long object 3 so as to be spaced from the marking device 30 at an interval L. The second camera 42 is located just above the receiving roller 9. The first camera 41 is disposed at the downstream side of the second camera 42 with respect to the feed direction A of the long object 3 so as to be spaced from the second camera 42 at an interval D. The first camera 41 is located just above the receiving roller 9f. The interval D is set to be equal to the mark interval S0 or substantially equal to the mark interval S0. That is, $D = S0$ or $D \cong S0$. This interval D is set so that two adjacent measuring marks $M_n$ and $M_{n+1}$ can simultaneously exist in the image pickup ranges of the first and second cameras 41 and 42 in accordance with the feeding of the long object 3. As a result, the first and second cameras 41 and 42 can simultaneously pick up images of the two measuring marks $M_n$ and $M_{n+1}$ located at both the ends of each of the plural mark intervals S0.

The measurement control circuit 50 periodically supplies an image pickup instruction DC to the first and second cameras 41 and 42 in accordance with the feeding of the long object 3. This image pickup instruction DC is supplied to the first and second cameras 41 and 42 at the same time, and the first and second cameras 41 and 42 pick up the images of the long object 3 on the basis of the image pickup instruction DC. The image pickup instruction DC is supplied from the measurement control circuit 50 and the first and second cameras 41 and 42 simultaneously pick up the images of the two measuring marks $M_n$ and $M_{n+1}$ every time the measuring marks $M_n$ and $M_{n+1}$ are set to be located in the image pickup ranges of the first and second cameras 41 and 42 respectively in accordance with the feeding of the long object 3. The first and second cameras 41 and 42 supplies the pickup image information $I_1$ and $I_2$ to the measurement control circuit 50.

The measurement control circuit 50 contains an encoder counter 51, a marking controller 53, a camera controller 55, an image processing unit 57 and a control operation unit 60. The encoder counter 51 counts the number of pulses of the measuring pulse MP output from the rotary encoder 21. The marking controller 53 supplies a marking instruction DM to the marking device 30. The camera controller 55 controls to simultaneously supply the image pickup instruction DC to the first and second cameras 41 and 42 and also supply the image information $I_1$ and $I_2$ from the first and second cameras 41 and 42 to the image processing unit 57. The image processing unit 57 executes the image processing in accordance with each of the periodically supplied image pickup instructions DC. In this image processing, a mark interval calculation value $SOC_n$ between the measuring mark $M_{n+1}$ contained in the image information $I_2$ and the measuring mark $M_n$ contained in the image information $I_1$ is calculated. When the first to (n+1)-th measuring marks are represented by $M_1, M_2, ..., M_n, M_{n+1}$, the mark intervals $S0_1, S0_2, ..., S0_n$ exist between the respective two adjacent measuring marks. The image processing unit 57 calculates the mark interval calculation values $S0C_1, S0C_2, ..., S0C_n$ corresponding to these mark intervals $S0_1, S0_2, ..., S0_n$, respectively.

Fig. 2 is a diagram showing the principle of the image processing in the image processing unit 57. The abscissa axis of Fig. 2 corresponds to the position of the long object 3. The images of the measuring marks $M_n$ and $M_{n+1}$ are taken onto the screen of the image processing unit 57. The image processing unit 57 reads out the position $P_n$ of the measuring mark $M_n$ and the position $P_{n+1}$ of the measuring mark $M_{n+1}$, and from these positions $P_n$ and $P_{n+1}$, the image processing unit 57 calculates the mark interval calculation value $S0C_n$ between these positions $P_n$ and $P_{n+1}$. Since the positions $P_n$ and $P_{n+1}$ can be accurately read out, the mark interval calculation value $S0C_n$ can be accurately calculated.

The control operation unit 60 is constructed by a microcomputer, for example, and it outputs the marking instruction DM and the image pickup instruction DC periodically in accordance with the feeding of the long object 3. In addition, the control operation unit 60 calculates a first feed amount measurement value S1 and a second feed amount measurement value S2, and further calculates a correction coefficient k on the basis of the first and second feed amount measurement values S1 and S2. Furthermore, it calculates a corrected feed amount measurement value S3 by correcting the first feed amount measuring value S1 with the correction coefficient k. The first and second feed amount measurement values S1 and S2, the correction coefficient k and the corrected feed amount measurement value S3 will be described in detail later. The first feed amount measurement value S1 is calculated on the basis of the measuring pulse MP of the rotary encoder 21. The second feed amount measurement value S2 is calculated on the basis of the mark interval calculation values $S0C_1$ to $S0C_n$ calculated by the image processing unit 57. The control operation unit 60 outputs the marking instruction DM and the image pickup instruction DC on the basis of the corrected feed amount measurement value S3, and also outputs a correction coefficient calculating instruction DK.

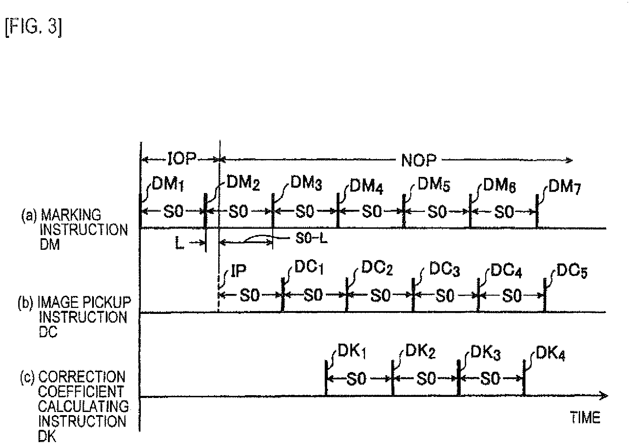

The operation of the feed amount measuring apparatus 10 according to the embodiment 1 will be described with reference to Figs. 3, 4 and 5. As shown in Fig. 3, the feed amount measuring apparatus 10 executes a normal operation NOP after an initial operation IOP. In Fig. 3, the abscissa axis represents the time. Fig.3(a) shows the marking instruction DM, Fig. 3(b) shows the image pickup instruction DC and Fig. 3(c) shows the correction coefficient calculating instruction DK. As shown in Fig. 3(a), the marking instruction DM is periodically outputted. In the initial operation IOP, the marking instructions $DM_1$ and $DM_2$ are outputted, and in the normal operation NOP, marking instructions $DM_3$, $DM_4$, ..., are periodically outputted. As shown in Fig. 3(b), the image pickup instruction DC is not outputted in the initial operation IOP, but the image pickup instructions $DC_1$, $DC_2$, ... are periodically outputted in the normal operation NOP. As shown in Fig. 3(c), the correction coefficient calculating instruction DK is not outputted in the initial operation IOP, but the correction coefficient calculating instructions $DK_1$, $DK_2$, ... are periodically outputted in the normal operation NOP. In Fig. 3(b), an initializing instruction IP is shown together with the image pickup instruction DC. The initial operation IOP is the operation before the initializing instruction IP is outputted, and the normal operation NOP is the operation after the initializing instruction IP is outputted.

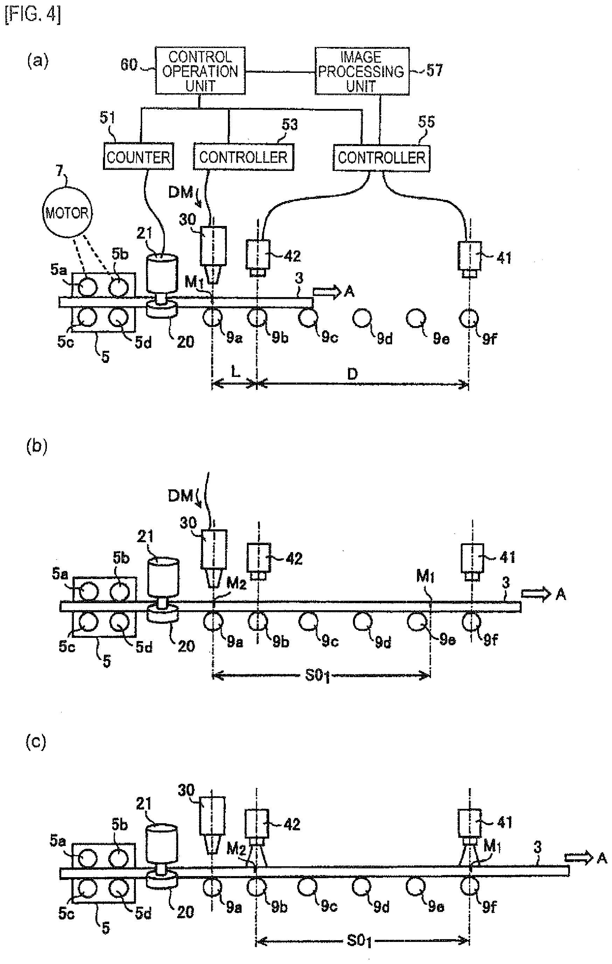

Figs. 4(a)(b)(c) show the state of the initial operation IOP of the feed amount measuring apparatus 10. In the initial operation IOP, the control operation unit 60 first outputs the marking instruction $DM_1$. Fig. 4(a) shows a first marking state under which this marking instruction $DM_1$ is outputted. The marking device 30 puts the first measuring mark $M_1$ onto the long object 3 on the basis of the marking instruction $DM_1$.

The control operation unit 60 outputs the next marking instruction $DM_2$. Fig. 4(b) shows a second marking state under which this marking instruction $DM_2$ is outputted. The second marking state corresponds to a state under which the long object 3 is fed from the first marking state shown in Fig. 4(a) in the feed direction A by only the distance corresponding to a unit feed amount S0 or only the distance corresponding to a unit feed amount S0 in terms of the measurement value based on the measuring roller 20. In the initial operation, the second feed amount measurement value S2 is set to zero, and the correction coefficient k is set to 1. The corrected feed amount measurement value S3 is equal to S1. Accordingly, the control operation unit 60 outputs the marking instruction $DM_2$ when the corrected feed amount measurement value S3 reaches the unit feed amount S0 from the first marking state shown in Fig. 4(a). The marking device 30 puts the second measuring mark $M_2$ onto the long object 3 on the basis of the marking instruction $DM_2$. The distance between the second measuring mark $M_2$ and the first measuring mark $M_1$ is set to the interval $S0_1$.

The control operation unit 60 subsequently outputs the initializing instruction IP. Fig. 4(c) shows an initialization state under which the initializing instruction IP is outputted. Under this initialization state, the long object 3 is further fed from the second marking state shown in Fig. 4(b) in the feed direction A by only the distance equal to the interval L, that is, the interval L between the marking device 30 and the first camera 41. This initialization state is a state under which the long object 3 is fed from the first marking state shown in Fig. 4(a) in the feed direction A by only the distance substantially corresponding to (S0+L). The control operation unit 60 outputs the initializing instruction IP when the corrected feed amount measurement value S3 reaches (S0+L) from the state shown in Fig. 4 (a) . Under the initialization state shown in Fig. 4(c), the adjacent measuring marks $M_1$ and $M_2$ exist in the image pickup ranges of the first and second cameras 41 and 42, respectively. Under this initialization state, the control operation unit 60 sets all the first and second feed amount measurement values S1 and S2 and the corrected feed amount measurement value S3 to zero. In the normal operation NOP subsequent to the initialization state shown in Fig. 4(c), the first feed amount measurement value S1 represents the feed amount of the long object 3 from the initialization state shown in Fig. 4(c).

Subsequently to the initializing instruction IP shown in Fig. 4(c), the feed amount measuring apparatus 10 starts the normal operation NOP. In the normal operation NOP, the control operation unit 60 periodically outputs the marking instructions DM, that is, the marking instructions $DM_3$, $DM_4$, ..., on the basis of the corrected feed measurement value S3 in accordance with the feeding of the long object 3, and also periodically outputs the image pickup instructions DC, that is, the image pickup instructions $DC_1$, $DC_2$, ... Furthermore, the control operation unit 60 outputs the correction coefficient calculating instruction DK, that is, the correction coefficient calculating instructions $DK_1$, $DK_2$, ... between the adjacent two image pickup instructions DC. The correction coefficient calculating instructions $DK_1$, $DK_2$, ... are periodically

outputted on the basis of the corrected feed amount measurement value S3 in accordance with the feeding of the long object 3.

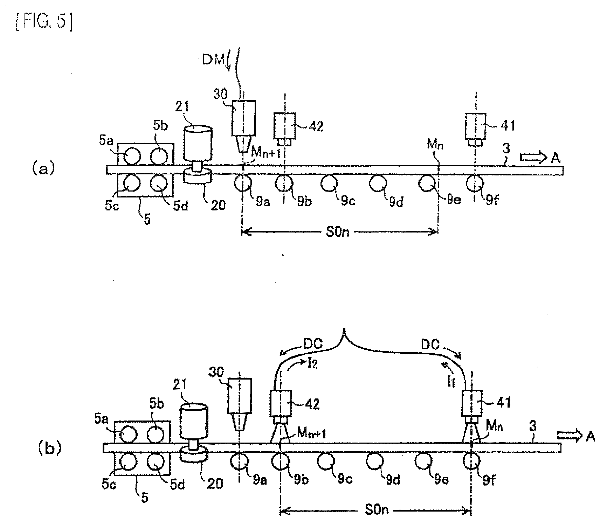

In the normal operation NOP, the marking instruction DM is outputted every time the corrected feed amount measurement value S3 reaches ($n \times S0 - L$), and it is periodically outputted as shown in Fig. 3(a). Here, n represents a positive integer. Fig. 5(a) shows the marking state corresponding to each of the marking instructions DK in the normal operation NOP. Under the marking state shown in Fig. 5(a), the marking device 30 puts the (n+1)-th measuring mark $M_{n+1}$ on the basis of the marking instruction DM so that the (n+1)-th measuring mark $M_{n+1}$ is spaced from the n-th measuring mark $M_n$ at the mark interval $S0_n$.

In the normal operation NOP, the image pickup instruction DC is outputted every time the corrected feed amount measurement value S3 reaches $n \times S0$, and it is periodically outputted as shown in Fig. 3(b). Fig. 5(b) shows the image pickup state corresponding to each image pickup instruction DC in the normal operation NOP. Under the image pickup state shown in Fig. 5(b), the first and second cameras 41 and 42 pick up the images of the adjacent two measuring marks $M_n$ and $M_{n+1}$, and the image information $I_1$ and $I_2$ containing these measuring marks $M_n$ and $M_{n+1}$ are input to the image processing unit 57.

The first and second feed amount measurement values S1 and S2, the correction coefficient k and the corrected feed amount measurement value S3 in the normal operation NOP will be specifically described.

The first feed amount measurement value S1 is calculated on the basis of the count value of the encoder counter 51. The count value of the encoder counter 51 corresponds to the count of the measuring pulse MP of the rotary encoder 21, and it represents an accumulated rotational angle of the measuring roller 20 in the normal operation NOP subsequently to the initializing instruction IP. This first feed amount measurement value S1 is continuously calculated from the initialization state of Fig. 4(c) in accordance with the feeding of the long object 3. The first feed amount measurement value S1 is represented by the following expression 1.

$$S1 = a \times \theta c \quad \text{… (expression 1)}$$

Here, $\theta c$ represents the accumulated rotational angle of the measuring roller 20 subsequently to the initializing instruction IP, and a represents a constant.

The mark interval calculation value $S0C_n$ between the two adjacent measuring marks $M_n$ and $M_{n+1}$ picked up on the basis of the image pickup instruction DC is calculated in the image processing unit 57 every time the image pickup instruction DC is outputted in accordance with the feeding of the long object 3. The second feed amount measurement value S2 and the correction coefficient k are periodically calculated in the normal operation NOP every time the correction coefficient calculating instruction DK is outputted. The correction coefficient calculating instruction DK is outputted between the adjacent two image pickup instructions DC on the basis of the corrected feed amount measurement value S3 by the control operation unit 60. The image processing unit 57 calculates the mark interval calculation value $S0C_n$ on the basis of the image information $I_1$ and $I_2$ input in response to the image pickup instruction DC, however, the correction coefficient calculating instruction DK is outputted after the image processing unit 57 finishes the calculation of the mark interval calculation value $S0C_n$. The second feed amount measurement value S2 is calculated on the basis of the output of the image processing unit 57 every time the correction coefficient calculating instruction DK is outputted.

In the normal operation NOP, the mark interval calculation value S0C calculated on the basis of the n-th image pickup instruction $DC_n$ is represented by $S0C_n$, the second feed amount measurement value S2 corresponding to the n-th image pickup instruction $DC_n$ is represented by $S2_n$, and the correction coefficient k corresponding to the n-th image pickup instruction $DC_n$ is represented by $k_n$. The second feed amount measurement value $S2_n$ and the correction coefficient $k_n$ are calculated on the basis of the n-th correction coefficient calculating instruction $DK_n$. Here, n represents a positive integer, and the image pickup instruction DCn corresponds to all the image pickup instructions DC. The second feed amount calculation value S2 is calculated on the basis of the mark interval calculation value $S0C_n$ outputted from the image processing unit 57 every time the correction coefficient calculating instruction DK is outputted.

The second feed amount measurement value $S2_n$ calculated in response to the n-th image pickup instruction $DC_n$ is represented by the following expression 2.

$$S2_n = ADD(S0C_1 - S0C_{n-1}) + S0C_n \quad \text{… (expression 2)}$$

Here, $ADD(S0C_1 - S0C_{n-1})$ represents the accumulation value of the mark interval calculation values $S0C_1$ to $S0C_{n-1}$ calculated by the image processing unit 57 in response to the past first to (n-1)-th image pickup instructions $DC_1$ to $DC_{n-1}$, and $S0C_n$ represents the mark interval calculation value calculated by the image processing unit 57 in response to the new n-th image pickup instruction $DC_n$. The accumulation value $ADD(S0_1 - S0_{n-1})$ is stored in a memory of the control operation unit 60, and the new mark interval calculation value $S0C_n$ obtained on the basis of the n-th image pickup instruction $DC_n$ is added to the accumulation value $ADD(S0C_1 - S0C_{n-1})$.

In connection with the calculation of the correction coefficient k, every time the image pickup instruction DC is outputted, the first feed amount measurement value S1 at the timing at which the image pickup instruction DC concerned is outputted is stored in the memory of the control operation unit 60. The first feed amount measurement value S1 at the timing at which the n-th image pickup instruction $DC_n$ is outputted is represented by $S1_n$.

The correction coefficient k is calculated on the basis of the correction coefficient calculating instruction DK after the second feed amount measurement value S2 is calculated. This correction coefficient k is also periodically calculated on the basis of the correction coefficient calculating instruction DK. The correction coefficient $k_n$ calculated on the basis of the n-th correction coefficient calculating instruction $DK_n$ is calculated according to the following expression 3.

$$k_n = S2_n/S1_n \quad \dots \text{(expression 3)}$$

In the expression 3, $S2_n$ represents the second feed amount measurement value of the long object 3 from the output of the initializing instruction IP till the output of the n-th image pickup instruction $DC_n$, and this is the feed amount measurement value calculated on the basis of the calculation of the image processing unit 57. In the expression 3, $S1_n$ represents the first feed amount measurement value of the long object 3 from the output of the initializing instruction IP till the output of the n-th image pickup instruction $DC_n$, and this is the feed amount measurement value calculated on the basis of the rotation of the measuring roller 20. If an error such as slip or the like is not contained in the first feed amount measurement value $S1_n$, the correction coefficient $k_n$ is equal to 1. If the first feed amount measurement value $S1_n$ is reduced to be smaller than an expected value due to an error such as slip of the measuring roller 20 or the like, the correction coefficient $k_n$ is equal to a value larger than 1 in accordance with the error amount concerned.

This correction coefficient $k_n$ is calculated on the basis of the correction coefficient calculating instruction $DK_n$, and then stored in the memory of the control operation unit 60 until the next correction coefficient calculating instruction $DK_{n+1}$ is outputted. As a result, the correction coefficient k is changed to an updated value $k_n$ calculated according to the expression 3 every time the correction coefficient calculating instruction $DK_n$ is outputted in accordance with the feeding of the long object 3, and this updated value $k_n$ is held until the next correction coefficient calculating instruction $DK_{n+1}$ is outputted. As a result, the correction coefficient k can be also continuously obtained in accordance with the feeding of the long object 3.

The corrected feed amount measurement value S3 is continuously calculated by multiplying the first feed amount measurement value S1 by the correction coefficient k. When the correction coefficient k is the updated value $k_n$, the corrected feed amount measurement value S3 is calculated according to the following expression 4.

$$S3 = k_n \times S1 \quad \dots \text{(expression 4)}$$

The correction coefficient k is continuously obtained in accordance with the feeding of the long object 3 while the correction coefficient k is updated, and thus the corrected feed amount measurement value S3 is also continuously calculated in accordance with the feeding of the long object 3.

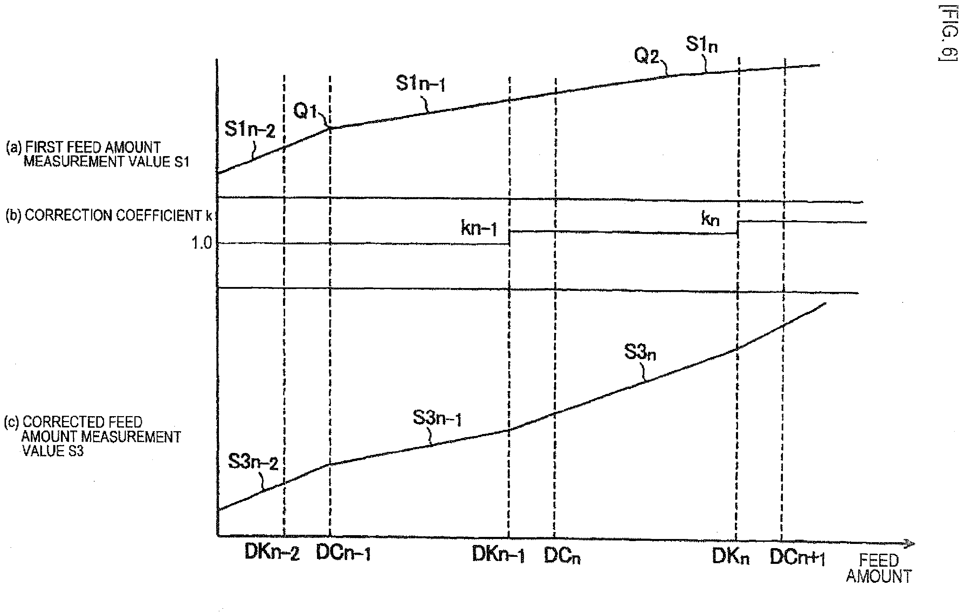

Fig. 6 is a diagram showing examples of variations of the first feed amount measurement value S1, the correction coefficient k and the corrected feed amount measurement value S3 in the normal operation NOP. Fig. 6(a) shows the first feed amount measurement value S1, Fig. 6(b) shows the correction coefficient k, and Fig. 6(c) shows the corrected feed amount measurement value S3. The abscissa axis of Fig. 6 show the feed amount. It is assumed that the first feed amount measurement value S1 shown in Fig. 6(a) first varies as indicated by a characteristic $S1_{n-2}$ until the image pickup instruction $DC_{n-1}$ is outputted, varies as indicated by a characteristic $S1_{n-1}$ between the image pickup instruction $DC_{n-1}$ and the next image pickup instruction $DC_n$, and also varies as indicated by a characteristic $S1_n$ between the image pickup instruction $DC_n$ and the next image pickup instruction $DC_{n+1}$.

Specifically, it is assumed that slip, etc. do not occur between the measuring roller 20 and the long object 3 until the image pickup instruction $DC_{n-1}$ is outputted, the first feed amount measurement value S1 varies as indicated by the characteristic $S1_{n-1}$ having a predetermined gradient, slip occurs between the measuring roller 20 and the long object 3 at a point $Q_1$ just after the image pickup instruction $DC_{n-1}$ is outputted, and the first feed amount measurement value S1 varies as indicated by the characteristic $S1_{n-1}$ having a smaller gradient than the characteristic $S1_{n-2}$ between the image pickup instruction $DC_{n-1}$ and the image pickup instruction $DC_n$. Furthermore, it is assumed that slip also occurs between the measuring roller 20 and the long object 3 at an intermediate point $Q_2$ between the image pickup instruction

$DC_n$ and the image pickup instruction $DC_{n+1}$, and the first feed amount measurement value S1 varies as indicated by the characteristic $S1_n$ having a smaller gradient than the characteristic $S1_{n-1}$ at the last half portion between the image pickup instruction $DC_n$ and the image pickup instruction $DC_{n+1}$.

The correction coefficient k shown in Fig. 6(b) keeps 1 until the correction coefficient calculating instruction $DK_{n-1}$. However, when the correction coefficient calculating instruction $DK_{n-1}$ is outputted, the first feed amount measurement value S1 is lower than the expected value due to the effect of the slip at the point $Q_1$ just after the image pickup instruction $DC_{n-1}$, and thus the correction coefficient k increases to a value $k_{n-1}$ which exceeds 1. Thereafter, the correction coefficient $k_{n-1}$ keeps its value until the correction coefficient calculating instruction $DK_n$, and at the timing when the correction coefficient calculating instruction $DK_n$ is outputted, the first feed amount measurement value S1 is further lower than the expected value due to the effect of the slip at the intermediate point $Q_2$ between the image pickup instruction $DC_n$ and the image pickup instruction $DC_{n+1}$, and thus the correction coefficient k increases to a value $k_n$ which is further larger than the value $k_{n-1}$.

As shown in Fig. 6(c), the corrected feed amount measurement value S3 varies as indicated by characteristics $S3_{n-2}$ and $S3_{n-1}$ having the same gradient as the characteristics $S1_{n-2}$ and $S1_{n-1}$ until the correction coefficient calculating instruction $DK_{n-1}$, on the basis of the variation of the correction coefficient k shown in Fig. 6(b). However, it varies as indicated by the characteristic $S3_n$ having a larger gradient than the characteristic $S3_{n-1}$ between the correction coefficient calculating instruction $DK_{n-1}$ and the correction coefficient calculating instruction $DK_n$, and thus the reduction of the gradient of the characteristic $S1_{n-1}$ due to the slip is compensated. Between the correction coefficient calculating instruction $DK_n$ and the next correction coefficient calculating instruction, the corrected feed amount measurement value S3 varies as indicated by a characteristic having a larger gradient than the characteristic $S1_n$, and thus the reduction of the gradient of the characteristic $S1_n$ due to the slip is compensated.

As described above, the corrected feed amount measurement value S3 is a more accurate feed amount measurement value which compensates for the reduction of the first feed amount measurement value S1 caused by slip or the like in the normal operation NOP. In addition, the corrected feed amount measurement value S3 is obtained by correcting the first feed amount measurement value S1 with the correction coefficient k, and thus it is continuously calculated in accordance with the feeding of the long object 3 as in the case of the first feed amount measurement value S1. The corrected feed amount measurement value S3 is used to output the marking instruction DM, the image pickup instruction DC and the correction coefficient calculating instruction DK, and enables these instructions to occur at more accurate positions. Furthermore, the corrected feed amount measurement value S3 is used for the speed control of the electric motor 7 for driving the driving mechanism 5, and it can control the long object 3 at a more accurate speed.

Embodiment 2

According to the embodiment 1, in the normal operation NOP, the images of the adjacent two measuring marks $M_n$ and $M_{n+1}$ are picked up simultaneously and only once by the first and second cameras 41 and 42 on the basis of the respective image pickup instructions DC under the state that these measuring marks exist in the image pickup ranges of the first and second cameras 41 and 42, and the image processing unit 57 calculates the mark interval calculation value $S0C_n$ between these measuring marks. There is a risk that an error caused by variations of the images of the measuring marks $M_n$ and $M_{n+1}$, specifically, variations in contrast of the mark boundaries of the measuring marks $M_n$, $M_{n+1}$ occurs in the mark interval calculation value $S0C_n$ calculated by the image processing unit 57.

In the feed amount measuring apparatus 10A of the embodiment 2, in order to reduce the error of the mark interval calculation value $S0C_n$ caused by the image variation of the two measuring marks $M_n$ and $M_{n+1}$, the images of the two measuring marks $M_n$ and $M_{n+1}$ are picked up simultaneously at plural times by the first and second cameras 41 and 42 on the basis of the respective image pickup instructions DC in the normal operation NOP under the state that the two measuring marks $M_n$ and $M_{n+1}$ are located in the respective image pickup ranges of the first and second cameras 41 and 42.

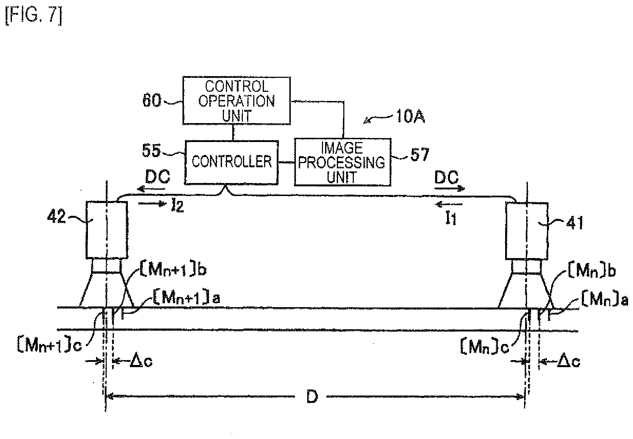

Fig. 7 is a construction diagram showing a main part of the embodiment 2 of the long object feed amount measuring apparatus according to this invention. In the feed amount measuring apparatus 10A of the embodiment 2, as in the case of the embodiment 1, the image pickup instruction DC is periodically supplied to the image pickup device 40, and this image pickup instruction DC is supplied to the first and second cameras 41 and 42 at the same time. However, image pickup instructions $DC_a$, $DC_b$ and $DC_c$ of plural times are supplied at a minute distance interval $\Delta c$ in accordance with each of the image pickup instructions DC. In Fig. 7, the measuring mark $M_n$ is illustrated as three measuring marks $[M_n]_a$, $[M_n]_b$ and $[M_n]_c$ which are mutually spaced from one another by only a minute distance interval $\Delta c$. All of these measuring marks $[M_n]_a$, $[M_n]_b$ and $[M_n]_c$ are located in the image pickup range of the first camera 41. Furthermore, the measuring mark $M_{n+1}$ is illustrated as three measuring marks $[M_{n+1}]_a$, $[M_{n+1}]_b$ and $[M_{n+1}]_c$ which are mutually spaced from one another by only the minute distance interval $\Delta c$. All of these measuring marks $[M_{n+1}]_a$, $[M_{n+1}]_b$ and $[M_{n+1}]_c$ are located in the image pickup range of the second camera 42.

In the feed amount measuring apparatus 10A of the embodiment 2, image pickup A, image pickup B and image pickup C are executed on the basis of image pickup instructions $DC_a$, $DC_b$, $DC_c$, respectively. It is assumed that the mark interval calculation value $S0C_n$ is calculated on the basis of the n-th image pickup instruction $DC_n$ in the normal operation NOP. The image pickup A, the image pickup B and the image pickup C are executed in response to the n-th image pickup instruction $DC_n$. In the image pickup A, the images of the measuring mark $[M_n]_a$ and the measuring mark $[M_{n+1}]_a$ are simultaneously picked up by the first and second cameras 41 and 42, and the image information $I_1$ and $I_2$ containing these measuring marks are input to the image processing unit 57. Likewise, in the image pickup B, the images of the measuring mark $[M_n]_b$ and the measuring mark $[M_{n+1}]_b$ are simultaneously picked up by the first and second cameras 41 and 42, and the image information $I_1$ and $I_2$ containing these measuring marks are input to the image processing unit 57. Likewise, in the image pickup C, the images of the measuring mark $[M_n]_c$ and the measuring mark $[M_{n+1}]_c$ are simultaneously picked up by the first and second cameras 41 and 42, and the image information $I_1$ and $I_2$ containing these measuring marks are input to the image processing unit 57. The image processing unit 57 calculates the mark interval calculation value $S0C_{na}$ between the measuring mark $[M_n]_a$ and the measuring mark $[M_{n+1}]_a$, the mark interval calculation value $S0C_{nb}$ between the measuring mark $[M_n]_b$ and the measuring mark $[M_{n+1}]_b$ and the mark interval calculation value $S0C_{nc}$ between the measuring mark $[M_n]_c$ and the measuring mark $[M_{n+1}]_c$. The control operation unit 60 statistically processes the mark interval calculation values $S0C_{na}$, $S0C_{nb}$ and $S0C_{nc}$ to calculate the mark interval calculation value $S0C_n$.

As described above, in the feed amount measuring apparatus 10A of the embodiment 2, the control operation unit 60 statistically processes the three mark interval calculation values $S0C_{na}$, $S0C_{nb}$ and $S0C_{nc}$ calculated in the image processing unit 57 and calculates the mark interval value $S0C_n$ in response to each image pickup instruction DC, whereby the calculation error of the mark interval calculation value $S0C_n$ caused by the image variation of the measuring marks $M_n$ and $M_{n+1}$ can be further reduced and thus the mark interval calculation value $S0C_n$ can be calculated with high calculation precision. As a result, the mark interval calculation value S0C corresponding to each image pickup instruction DC is more accurate. Accordingly, according to the embodiment 2, the second feed amount measurement value S2 can be more accurately calculated, and thus the corrected feed amount calculation value S3 can be more accurately calculated.

The feed amount measuring apparatus 10A of the embodiment 2 is designed in the same construction as the embodiment 1 except that the image pickup is executed at plural times in response to each image pickup instruction DC, and the mark interval calculation value S0C is calculated on the basis of the image pickup operation of plural times.

Embodiment 3

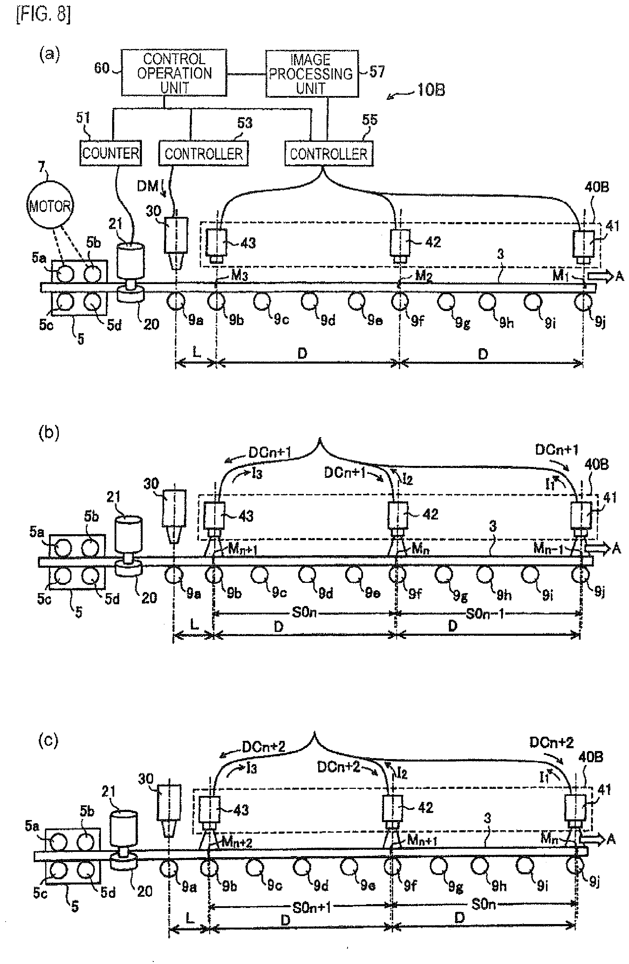

In the embodiment 3, as in the case of the embodiment 2, the calculation error of the mark interval calculation value $S0C_n$ caused by the image variation of the measuring mark M is reduced, and thus the mark interval calculation value $S0C_n$ is calculated with higher calculation precision. Fig. 8 shows the embodiment 3 of the long object feed amount measuring apparatus of this invention. Fig. 8 (a) shows the state of the initializing operation IOP, and Figs. 8(b)(c) show the state of the normal operation NOP. In the feed amount measuring apparatus 10B of this embodiment 3, as shown in Fig. 8, an image pickup device 40B containing three cameras 41, 42 and 43 is used in place of the image pickup device 40 of the embodiment 1, and in connection with this, the output timing of the initializing instruction IP, the calculation of the mark interval calculation value $S0C_n$ in the image processing unit 57 and the calculation of the second feed amount measurement value S2 in the control operation unit 60 are changed. The other constructions of the feed amount measuring apparatus 10B of the embodiment 3 are the same as the embodiment 1.

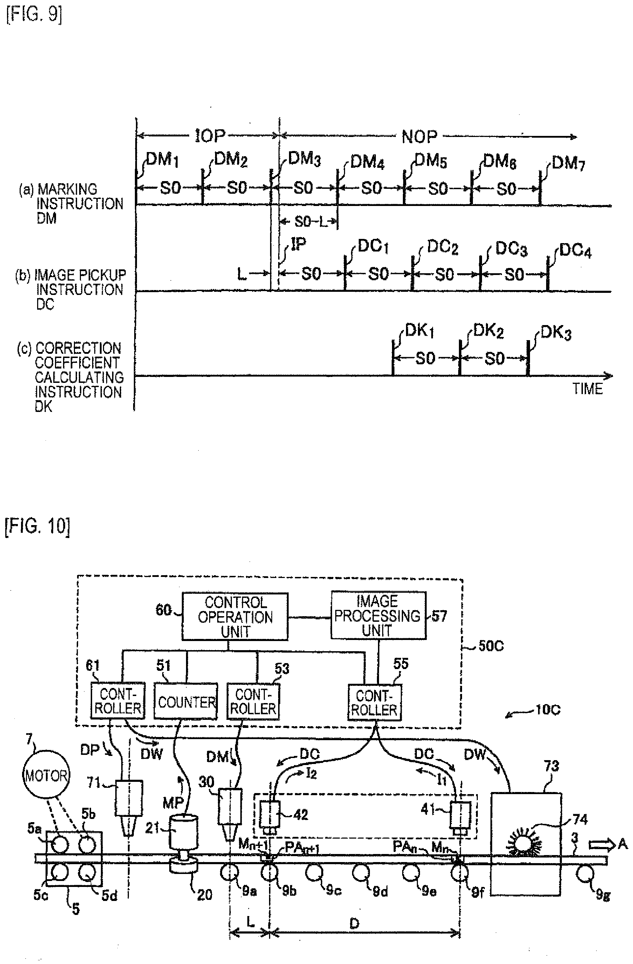

Fig. 9 is a timing chart showing the timings of the marking instruction DM, the image pickup instruction DC and the correction coefficient calculating instruction DK. Fig. 9(a) shows the marking instruction DM. Fig. 9(b) shows the image pickup instruction DC, and this image pickup instruction DC is periodically outputted after the marking instruction $DM_4$ in the normal operation NOP after the initial operation IOP. Fig. 9(c) shows the correction coefficient calculating instruction DK, and this correction coefficient calculating instruction DK is periodically outputted after the image pickup instruction $DC_1$ in the normal operation NOP.

As shown in Figs. 8(a) (b) (c), the third camera 43 of the image pickup device 40B is disposed at the downstream side of the marking device 30 with respect to the feeding direction A of the long object 3 so as to be spaced from the marking device 30 by only an interval L. The second camera 42 is disposed at the downstream side of the third camera 43 so as to be spaced from the third camera 43 by only an interval D. Furthermore, the first camera 41 is disposed at the downstream side of the second camera 42 with respect to the feed direction A of the long object 3 so as to be spaced from the second camera 42 by only the interval D. The cameras 43, 42 and 41 are disposed just above the receiving rollers 9b, 9f, 9j, respectively. These cameras 41, 42 and 43 are simultaneously supplied with the image pickup instruction DC from the camera controller 55.

In the feed amount measuring apparatus 10B of the embodiment 3, as shown in Fig. 9, the initializing instruction IP is outputted under the state that the long object 3 is fed by only the distance corresponding to the interval L after the third marking instruction $DM_3$ is outputted and the third measuring mark $M_3$ is put to the long object 3. The feed amount measuring apparatus 10B of the embodiment 3 executes the initial operation IOP until the initializing instruction IP is outputted, and executes the normal operation NOP after the initializing instruction IP. Under the initialization state shown in Fig. 8(a), the first, second and third measuring marks $M_1$, $M_2$ and $M_3$ are located in the image pickup ranges of the first, second and third cameras 41, 42 and 43, respectively. On the basis of the initializing instruction IP outputted under this initialization state, the first and second feed amount measurement values S1 and S2 are set to zero and the correction coefficient k is set to 1 as in the case of the embodiment 1.

The image pickup device 40B of the embodiment 3 simultaneously picks up the images of adjacent three measuring marks M of plural mark intervals in the normal operation NOP every time the image pickup instruction DC is outputted, and as a result, the images of the same adjacent two measuring marks $M_n$ and $M_{n+1}$ out of the plural measuring marks M are picked up twice in response to two sequential image pickup instructions DC. The feed amount measuring apparatus 10B twice calculates the mark interval calculation value corresponding to the mark interval $S0_n$ between these measuring marks $M_n$ and $M_{n+1}$ on the basis of the same two measuring marks $M_n$ and $M_{n+1}$ whose images are picked up twice, and statistically processes these mark interval calculation values to calculate the mark interval calculation value $S0C_n$.

In the normal operation NOP, the marking instruction DM is outputted every time the corrected feed amount measurement value S3 reaches ($n \times S0 - L$), and as shown in Fig. 9(a), it is periodically outputted at the interval S0 corresponding to the unit feed amount S0. Here, n represents a positive integer. The marking device 30 puts the measuring marks $M_{n-1}$, $M_n$, $M_{n+1}$, $M_{n+2}$ on the basis of the marking instruction DM.

In the normal operation NOP, the image pickup instruction DC is outputted every time the corrected feed amount measurement value S3 reaches $nXS0$, and it is periodically outputted at the interval S0 after the fourth marking instruction $DC_4$ as shown in Fig. 9(b). Fig. 8(b) shows the image pickup state under which the image pickup instruction $DC_{n+1}$ is outputted in the normal operation NOP. Under the image pickup state shown in Fig. 8(b), the first, second and third cameras 41, 42 and 43 simultaneously picks up the images of the three measuring marks $M_{n-1}$, $M_n$, $M_{n+1}$ located at both the ends of each of the adjacent two mark intervals $S0_{n-1}$ and $S0_n$, and the image pickup information $I_1$, $I_2$ and $I_3$ containing these measuring marks $M_{n-1}$, $M_n$, $M_{n+1}$ are input to the image processing unit 57.

Under the image pickup state shown in Fig. 8(b), the measuring marks $M_{n-1}$, $M_n$, $M_{n+1}$ are located in the respective image pickup ranges of the first, second and third cameras 41, 42 and 43, and the images of the three adjacent measuring marks $M_{n-1}$, $M_n$, $M_{n+1}$ are simultaneously picked up by three cameras 41, 42 and 43. The first, second and third cameras 41, 42 and 43 simultaneously generate the image pickup information $I_1$, $I_2$ and $I_3$ containing the measuring marks $M_{n-1}$, $M_n$, $M_{n+1}$, respectively. On the basis of the image pickup information $I_1$, $I_2$ and $I_3$, the image processing unit 57 calculates the mark interval calculation value $(S0C_{n-1})_{n+1}$ corresponding to the mark interval $S0_{n-1}$ between the measuring mark $M_{n-1}$ and the measuring mark $M_n$, and calculates the mark interval calculation value $(S0C_n)_{n+1}$ corresponding to the mark interval $S0_n$ between the measuring mark $M_n$ and the measuring mark $M_{n+1}$, and stores these values.

Under the image pickup state shown in Fig. 8 (c), that is, under the state that the next image pickup instruction $DC_{n+2}$ subsequent to the image pickup instruction $DC_{n+1}$ is outputted, the images of the measuring marks $M_n$, $M_{n+1}$, $M_{n+2}$ are simultaneously picked up. Under the image pickup state based on the image pickup instruction $DC_{n+2}$, the measuring marks $M_n$, $M_{n+1}$, $M_{n+2}$ exist in the respective image pickup ranges of the cameras 41, 42 and 43, the images of the measuring marks $M_n$, $M_{n+1}$, $M_{n+2}$ are simultaneously picked up, and the image processing unit 57 calculates the mark interval calculation value $(SOC_n)_{n+2}$ corresponding to the mark interval $S0_n$ between the measuring mark $M_n$ and the measuring mark $M_{n+1}$, and calculates the mark interval calculation value $(S0C_{n+1})_{n+2}$ corresponding to the mark interval $S0_{n+1}$ between the measuring mark $M_{n+1}$ and the measuring mark $M_{n+2}$.

On the basis of the twice image pickup operation shown in Figs. 8(b) (c), the two mark interval calculation values $(S0C_n)_{n+1}$, $(S0C_n)_{n+2}$ are calculated in connection with the mark interval $S0_n$ between the measuring mark $M_n$ and the measuring mark $M_{n-1}$. The mark interval calculation value $(S0C_n)_{n+1}$ is calculated on the basis of the image pickup instruction $DC_{n+1}$, and the mark interval calculation value $(S0C_n)_{n+2}$ is calculated on the basis of the next image pickup instruction $DC_{n+2}$ to the image pickup instruction $DC_{n+1}$. The image processing unit 57 statistically processes these two mark interval calculation values $(S0C_n)_{n+1}$ and $(S0C_n)_{n+2}$, and calculates the mark interval calculation value $S0C_n$ corresponding to the mark interval $S0_n$. With respect to the other mark intervals other than the mark interval $S0_n$, the two mark interval calculation values are likewise calculated for each mark interval, and the two mark interval calculation values are statistically processed to calculate the mark interval calculation value.

As described above, in the feed amount measuring apparatus of the embodiment 3, the control operation unit 60 calculates the mark interval calculation values $(S0C_n)_{n+1}$ and $(S0C_n)_{n+2}$ corresponding to the mark interval $S0_n$ on the basis of the two sequential image pickup instructions $DC_{n+1}$ and $DC_{n+2}$, and the more accurate mark interval calculation value $S0C_n$ can be obtained by statistically processing the two mark interval calculation values. In the feed amount measuring apparatus 10B of the embodiment 3, the control operation unit 60 further reduces the calculation error of the mark interval calculation value $S0C_n$ caused by the image variation of the measuring marks and calculate the mark interval calculation value $S0C_n$ with high calculation precision as in the case of the embodiment 2. As a result, the mark interval calculation value S0C corresponding to each image pickup instruction DC is more accurate, and thus according to the embodiment 3, the second feed amount measurement value S2 can be more accurately calculated, whereby the corrected feed amount measurement value S3 can be calculated more accurately.

Embodiment 4

Fig. 10 is a construction diagram showing an embodiment 4 of the long object feed amount measuring apparatus according to this invention. The feed amount measuring apparatus 10C of the embodiment 4 is designed so that a paint coating device 71 and a paint wiping device 73 are added to the feed amount measuring apparatus 10 of the embodiment 1 shown in Fig. 1 and the measurement control circuit 50 shown in Fig. 1 is replaced by a measurement control circuit 50C. The other construction is the same as the embodiment 1.

The measurement control circuit 50C is designed so that a paint controller 61 is added to the measurement control circuit 50 shown in Fig. 1. The control operation unit 60 outputs a paint instruction DP and a paint wiping instruction DW on the basis of the corrected feed amount measurement value S3. The paint controller 61 is connected to the control operation unit 60 to supply the paint instruction DP to the paint coating device 71 and also supply the paint wiping instruction DW to the paint wiping device 73.

The paint coating device 71 is disposed at the upstream side of the marking device 30 with respect to the feed direction A of the long object 3. Specifically, the paint coating device 71 is disposed between the driving mechanism 5 and the measuring roller 20. The paint coating device 71 forms paint film PA on a surface portion of the long object 3 which corresponds to the position at which each measuring mark M is put by the marking device 30. The paint forming the paint film PA is immediately-drying paint, and it is formed of a material which does not smudge the measuring mark M and enhances the contrast of the measuring mark M. The paint film $PA_n$ and $PA_{n+1}$ corresponding to the measuring marks $M_n$ and $M_{n+1}$ are shown in Fig. 10. The positions of the surface portions at which the paint film $PA_n$ and $PA_{n+1}$ are formed are indicated on the basis of the paint instruction DP from the control operation unit 60.

The marking device 30 forms the measuring mark M on the paint film PA. In Fig. 10, the measuring marks $M_n$ and $M_{n+1}$ are superposed on the corresponding paint film $PA_n$ and $PA_{n+1}$.

The paint wiping device 73 is disposed at the downstream side of the image pickup device 40 with respect to the feed direction A of the long object 3. Specifically, the paint wiping device 73 is disposed at the downstream side of the first camera 41. This paint wiping device 73 has a wiping brush 74, and wipes and removes the paint film PA coated by the coating device 71 together with the measuring mark M by using the wiping brush 74. In this embodiment 3, all of the paint film PA and the measuring marks M are removed at the downstream side of the paint wiping device 73. The paint film $PA_n$ and $PA_{n+1}$ shown in Fig. 10 is removed together with the measuring marks $M_n$ and $M_{n+1}$ formed thereon.

In the embodiment 4, under the state that the first and second cameras 41 and 42 of the image pickup device 40 pick up the images of the measuring marks $M_n$ and $M_{n+1}$, the measuring marks $M_n$ and $M_{n+1}$ are formed on the paint film $PA_n$ and $PA_{n+1}$, and thus the contrast of the measuring marks $M_n$ and $M_{n+1}$ is enhanced. Accordingly, the images of the measuring marks $M_n$ and $M_{n+1}$ are made clear, and the mark interval calculation value S0C is more accurately calculated, so that the second feed amount measurement value S2 and the correction coefficient k are more accurately calculated and the corrected feed amount measurement value S3 can be more accurately calculated.

The paint wiping device 73 is used when the paint film PA and the measuring marks M are removed at the downstream side of the image pickup device 40. If there is no problem even when the paint film PA remains on the surface of the long object 3, or when the measuring mark M is left and it is afterwards used, the paint wiping device 73 is removed.

The paint coating device 71 of the embodiment 4 may be used not only in the embodiment 1, but also in the embodiments 2 and 3. In the embodiment 2, the paint film PA is commonly formed for each of three measuring marks which are proximate to one another so as to be spaced at a minute distance interval $\Delta c$, for example, the measuring marks $[M_n]_a$, $[M_n]_b$ and $[M_n]_c$.

Embodiment 5

According to this embodiment 5, in the construction that the marking device 30 is swept in the direction intersecting to the feed direction of the long object 3 and the measuring mark M is put by the sweeping of the marking device 30, the inclination angle of the measuring mark A to the feed direction A of the long object 3 is prevented from varying in accordance with variation of the feeding speed of the long object 3, and the mark interval calculation value S0C is prevented from varying dependently of the variation of the inclination angle of the measuring mark M.

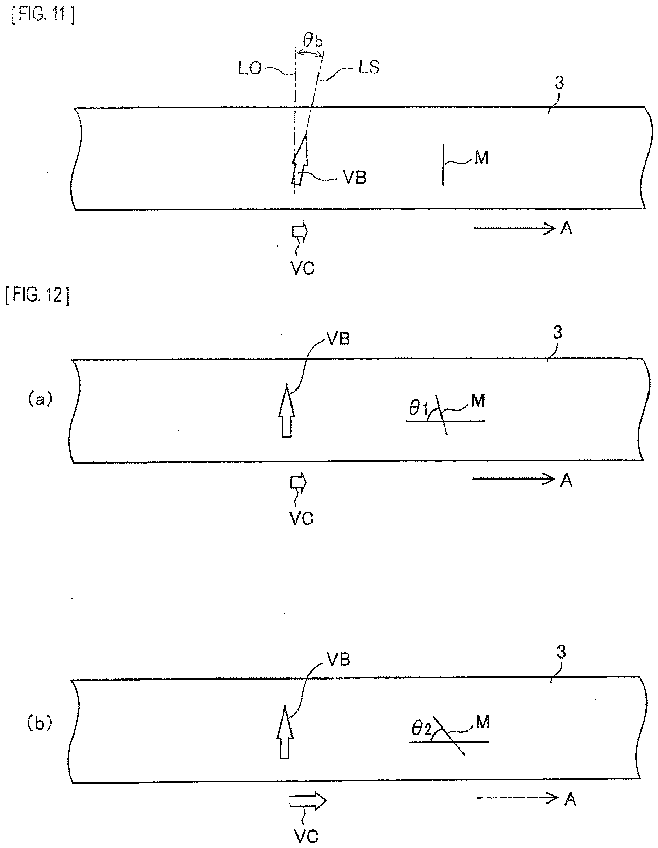

Fig. 11 is a diagram showing the sweeping of the marking device 30 in the embodiment 5 of the long object feed amount measuring apparatus according to this invention. In Fig. 11, an arrow VC represents the feeding speed vector of the feeding direction A of the long object 3, and an arrow VB represents the sweeping vector of the marking device 30. The feeding speed vector VC of the long object 3 is parallel to the feeding direction A of the long object 3 at all times, however, the magnitude thereof, that is, the magnitude of the speed vc varies in accordance with variation of the feeding speed of the long object 3.

The marking device 30 is constructed by a laser marker, for example. This laser marker is swept at the magnitude of the sweeping vector VB, that is, the sweeping speed vb along a scan line Ls which is inclined to a line Lo orthogonal to the feed direction A of the long object 3 by only an angle θb. On the basis of the sweeping of the marking device 30, the measuring mark M is printed so as to extend in parallel to the line Lo. The magnitude of the feeding speed vector VC of the long object 3, that is, the feeding speed vc varies in accordance with the feeding speed of the long object 3. Therefore, in the embodiment 5, the sweeping of the marking device 30 is controlled so that the magnitude of the sweeping vector VB, that is, the sweeping speed vb of the marking device 30 is not varied, and the angle θb varies in accordance with the variation of the feeding speed vc.

In Fig. 11, the angle θb is represented by the following expression 5.

$$\theta b = \sin^{-1}(vc/vb) \quad \dots \text{(expression 5)}$$

In the embodiment 5, the speed vb is kept to a constant value even when the speed vc varies in the expression 5, so that the angle θb is varied in connection with the variation of (vc/vb) and the measuring mark M is kept in parallel to the line Lo at all times.

Specifically, for example, if the magnitude of the feeding vector VC, that is, the feeding speed vc varies to increase from Fig. 11, the angle θv is controlled to increase from Fig. 11 in accordance with the increase of the speed vc, and the measuring mark M is kept in parallel to the line Lo. Conversely, for example, if the magnitude of the feeding speed vector VC, that is, the feeding speed vc varies to decrease from Fig. 11, the angle θb is controlled to decrease from Fig. 11 in accordance with the decrease of the feeding speed vc, and the measuring mark M is kept in parallel to the line Lo. As a result, all of plural measuring marks M put on the long object 3 are put in parallel to the line Lo even when the feeding speed varies. As a result, the mark interval calculation value S0C based on the image processing unit 57 is prevented from varying dependently on the variation of the inclination of the measuring mark M, and the second feed amount measurement value S2, the correction coefficient k and the corrected feed amount measurement value S3 can be more accurately calculated.

In the embodiment 5, the variation of the feeding speed vc is calculated on the basis of the variation of the corrected feed amount measurement value S3 by the control operation unit 60. The angle θb which corresponds to the variation of the feeding speed vc is also calculated in the control operation unit 60, and it is indicated to the marking device 30 together with the marking instruction DM. If the sweeping speed vb of the marking device 30 can be controlled, the angle θb may be kept to a constant value, and the sweeping speed vb may be controlled so that (vc/vb) is kept to a constant value even when the feeding speed vc varies.

Fig. 12 shows an example of the variation of the measuring mark M when the marking device 30 is swept at a constant sweeping speed in a constant sweeping direction for comparison. In Fig. 12, it is assumed that the marking device 30 is swept at the constant sweep vector VB at all times. Specifically, the marking device 30 is swept at the constant sweeping speed vb in the direction parallel to the line Lo orthogonal to the feeding direction A. When the magnitude of the feeding speed vector VC, that is, the feeding speed vc of the long object 3 is small shown in Fig. 12(a), the measuring mark M is inclined by only the angle $\theta_1$ in the feeding direction A. However, when the feeding speed vc of the long object 3 increases as shown in Fig. 12(b), the measuring mark M is inclined in the feeding direction A by an angle $\theta_2$ smaller than the angle θa. The variation of the inclination of the measuring mark M as described above causes an error in the mark interval calculation value S0C based on the image processing unit 57.

The sweeping control of the marking device 30 in the embodiment 5 is applicable to not only the embodiment 1, but also the embodiments 2 to 4.

Embodiment 6

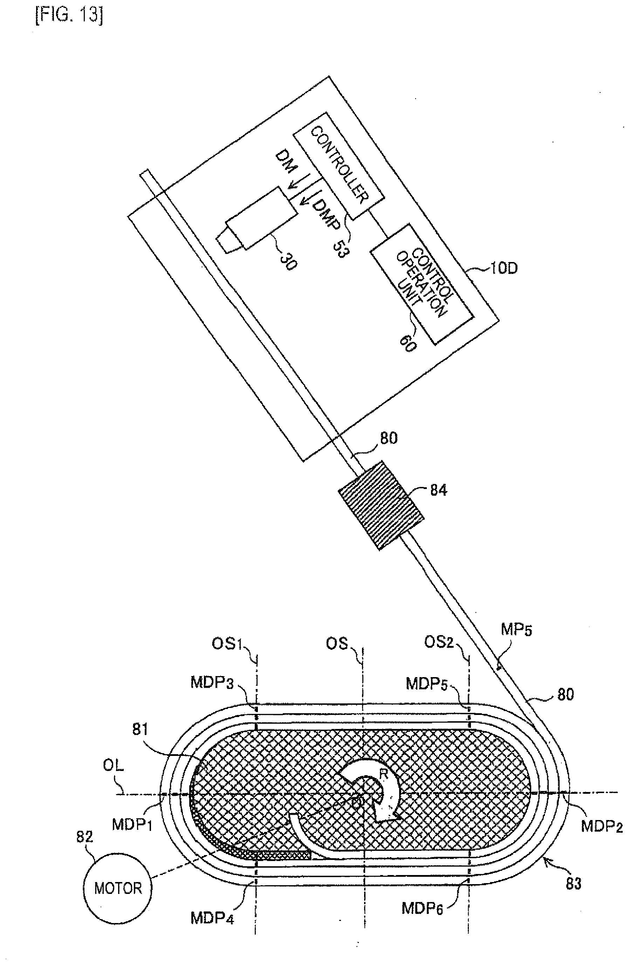

Fig. 13 is a construction diagram showing an embodiment 6 of the feed amount measuring apparatus according to this invention. In the feed amount measuring apparatus 10D of the embodiment 6, the control operation unit 60 is designed so as to output the marking instruction DM for printing the measuring mark M and also a second marking instruction DMP different from the marking instruction DM, and the marking instructions DM and DMP are supplied from the marking controller 53 to the marking device 30. In Fig. 13, only the control operation unit 60, the marking controller 53 and the marking device 30 are illustrated in the feed amount measuring apparatus 10D. However, the units other than the control operation unit 60, the marking controller 53 and the marking device 30 are constructed as in the case of the feed amount measuring device 10 of the embodiment 1. In the embodiment 6, the long object 3 is constructed as an electrical conductor 80, and the electrical conductor 80 is construed so as to be wound around a coil winding frame 81. The feed amount measuring apparatus 10D is configured to put plural position display marks MDP on the electrical conductor 80 in addition to the measuring marks M. The position display marks MDP are put on the basis of the second marking instruction DMP.

The coil winding frame 81 is driven in the direction of an arrow R by an electrical motor 82, and the electrical conductor 80 is wound around the coil winding frame 81 as an electrical coil 83. The coil winding frame 81 is driven in the direction of the arrow R around the center point O. In this embodiment 6, the electrical conductor 80 is driven by the electrical motor 82 for driving the coil winding frame 81, and fed out from the feed amount measuring apparatus 10D. Therefore, the driving mechanism 5 and the electrical motor 7 shown in Fig. 1 are not required to be used, and thus are removed. Furthermore, tension required for winding is applied to the electrical conductor 80 by a tension machine 84 before the electrical conductor 80 is introduced into the coil winding frame 81. The tension machine 84 applies tension to the electrical conductor 80 by utilizing friction or the like.

The coil winding frame 81 is designed in an elliptical shape, and has a major axis line OL and a minor axis line OS. The cross point between the major axis line OL and the minor axis line OS corresponds to the center point O Two axial lines $OS_1$ and $OS_2$ parallel to the minor axis line OS are set at both the sides of the minor axis line OS. These axis lines $OS_1$ and $OS_2$ pass through the center points of semicircles at both the sides of the coil winding frame 81. The electrical conductor 80 is wound around the outer periphery of the coil winding frame 81. The position display marks MDP contain position display marks $MDP_1$ to $MDP_6$. The position display marks $MDP_1$ and $MDP_2$ represent the position of the electrical conductor 80 which corresponds to the major axis line OL of the coil winding frame 81. The position display marks $MDP_3$ and $MDP_4$ represent the position of the electrical conductor 80 which correspond to the axis line $OS_1$ of the coil winding frame 81. The position display marks $MDP_5$ and $MDP_6$ represent the position corresponding to the axis line $OS_2$ of the coil winding frame 81.

The position display marks $MDP_1$ to $MDP_6$ are put on the electrical conductor 80 on the basis of the second marking instruction DMP by the marking device 30 so as to be arranged on a line on the axis lines OL, $OS_1$ and $OS_2$ when the electrical conductor 80 is wound around the outer periphery of the coil winding frame 81. A winding state under which the electrical conductor 80 is wound around the outer periphery of the coil winding frame 81 is assumed in advance, and the second marking instruction DMP prints the position display marks $MDP_1$ to $MDP_6$ so that the position display marks $MDP_1$ to $MDP_6$ are arranged on the respective axis lines OL, $OS_1$ and $OS_2$ under this winding state. The second marking instruction DMP is outputted on the basis of the corrected feed amount measurement value S3 by the control operation unit 60.

In the embodiment 6, the position display marks $MDP_1$ to $MDP_6$ are given so as to correspond to given winding positions of the electrical coil 83, that is, the axis lines OL, $OS_1$ and $OS_2$ respectively. Therefore, the electrical coil 83 can be wound around the coil winding frame 81 while the arrangement state of the position display marks $MDP_1$ to $MDP_6$ is checked, and thus the winding quality of the electrical coil 83 can be checked. Furthermore, in the embodiment 6, the marking device 30 put the position display marks MDP in addition to the measuring marks M, and thus no special marking device is required to put the position display marks MDP.

The position display marks $MDP_1$ to $MDP_6$ of the embodiment 6 are applicable to not only the embodiment 1, but also the embodiments 2, 3, 4 and 5 when the electrical conductor 80 is shaped as the electrical coil 83 by using the coil winding frame 81. In the embodiments 2 and 3, the corrected feed amount measurement value S3 is more accurately calculated, and the position display marks $MDP_1$ to $MDP_6$ can be put at the more accurate positions, so that the winding quality of the electrical coil 83 can be further enhanced.

Embodiment 7

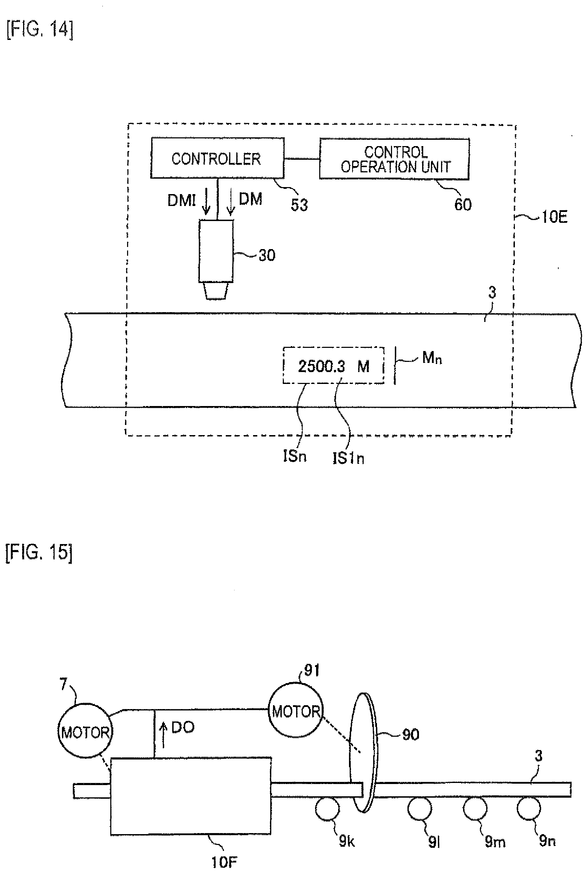

Fig. 14 is a construction diagram showing an embodiment 7 of the feed amount measuring apparatus according to this invention. In the feed amount measuring apparatus 10E of the embodiment 7, the control operation unit 60 is designed to output a third marking instruction DMI different from the marking instruction DM in addition to the marking instruction DM for putting the measuring mark M. These marking instructions DM and DMI are supplied from the marking controller 53 to the marking device 30. In Fig. 14, only the control operation unit 60, the marking controller 53 and the marking device 30 are illustrated in the feed amount measuring apparatus 10E. However, the units other than the control operation unit 60, the marking controller 53 and the marking device 30 are constructed as in the case of the feed amount measuring apparatus 10 of the embodiment 1 shown in Fig. 1.

In the embodiment 7, the third marking instruction DMI is used to put feed amount information IS at a predetermined position on the surface of the long object 3. The marking device 30 puts the measuring mark M on the basis of the marking instruction DM, and also puts the feed amount information IS on the long object 3 on the basis of the third marking instruction DMI. The feed amount information IS is put in proximity to each measuring mark M. In Fig. 14, the feed amount information $IS_n$ corresponding to the measuring mark $M_n$ is shown to be proximate to the measuring mark $M_n$.

The feed amount information IS is put to be proximate to each measuring mark M which is put on the basis of each marking instruction DM subsequent to the third marking instruction $DM_4$ shown in Fig. 3. The feed amount information IS contains accumulated feed amount information IS1 of the corresponding measuring mark M. The accumulated feed amount information IS1 represents the accumulated feed amount of the long object 3 from the initializing instruction IP shown in Fig. 3 till the corresponding measuring mark M. The feed amount information $IS_n$ shown in Fig. 14 contains the accumulated feed amount information $IS1_n$ of the measuring mark M, and this accumulated feed amount information $IS1_n$ represents the accumulated feed amount of the long object 3 accumulated from the initialization state of the corresponding measuring mark $M_n$, specifically, 2500.3 meters.

The accumulated feed amount information IS1 is used when the long object 3 is afterwards cut out by a predetermined length. In the cut-out work of the long object 3, the long object 3 can be cut out by a predetermined length with checking the accumulated feed amount information IS1, but without measuring the length of the long object 3 anew. The accumulated feed amount information IS containing not only the accumulated feed amount information IS1, but also date information representing the date on which the accumulated feed amount information IS1 may be marked. Furthermore, the marking device 30 marks the feed amount information IS together with the measuring mark M, and thus no special marking device is required to mark the feed amount information IS.

The feed amount information IS of the embodiment 7 may be applied to not only the embodiment 1, but also each of the other embodiments 2 to 6. When it is applied to the embodiment 3, the feed amount information IS may be marked to be proximate to each measuring mark M put on the basis of each of the marking instructions subsequent to the fourth marking instruction DM4 shown in Fig. 9. In the embodiment 4, when the paint wiping device 73 is used, it would be insignificant even if the feed amount information IS is applied. However, when the paint wiping device 73 is not used, the feed amount information IS is marked.

Embodiment 8

Fig. 15 is a construction diagram showing an embodiment 8 of the feed amount measuring apparatus according to this invention. A cutting device 90 for the long object 3 is used in the feed amount measuring apparatus 10F of this embodiment. The cutting device 90 is disposed at the downstream side of the feed amount measuring apparatus 10F. Specifically, the receiving rollers 9k to 9n are disposed at the downstream side of the feed amount measuring apparatus 10, and the cutting device 90 is disposed between the receiving roller 9k and the receiving roller 91. The cutting device 90 is constructed by using a metal saw or the like, and it is driven by an electrical motor 91. In the embodiment 8, the control operation unit 60 of the feed amount measuring apparatus 10F outputs a cutting instruction DO on the basis of the calculated corrected feed amount measurement value S3 when the corrected feed amount measurement S3 reaches a predetermined value.

The cutting device 90 starts up the electrical motor 91 on the basis of the cutting instruction DO, and cuts the long object 3 at a predetermined position. In the embodiment 8, the cutting instruction DO is outputted on the basis of the corrected feed amount measurement value S3, and thus the long object 3 can be cut at a more accurate predetermined position. The cutting instruction DO is also supplied to the electrical motor 7, and thus the electrical motor 7 is stopped to stop the feeding of the long object 3 when the long object 3 is cut by the cutting device 90.

The cutting of the long object 3 of the embodiment 8 is applicable to not only the embodiment 1, but also all the other embodiments 2 to 7.

Various modifications or changes of this invention can be implemented without departing from the scope of this invention by persons skilled in the related arts, and it is understood that the present invention is not limited to the embodiments described above but merely by the appended claims.

**Industrial Applicability**

The long object feed amount measuring apparatus of this invention is used to measure the feed amount of a long object such as an electrical conductor, an electrical cable, various kinds of hoses, etc.

**Claims**

1.  A long-object feed amount measuring apparatus for measuring a feed amount of a long object (3) in a long-object feeding apparatus (1) in which the long object (3) is fed in the length direction thereof, comprising:

    a measuring roller (20) that is in contact with the long object (3) and rotates on the basis of feeding of the long object (3);
    a rotary encoder (21) that successively generates a measuring pulse (MP) on the basis of the rotation of the measuring roller (20);
    a measurement control circuit (50) contains a control operation unit (60) that calculates a corrected feed amount measurement value (S3) representing the feed amount of the long object (3) upon reception of the measuring pulse (MP), and periodically outputs a marking instruction (DM) and an image pickup instruction (DC) on the basis of the corrected feed amount measurement value (S3) in a normal operation (NOP) subsequently an initializing instruction (IP);

a marking device (30) that puts plural measuring marks (M) onto the long object (3) on the basis of the marking instruction (DM) so that each of adjacent two measuring marks (M) among the plural measuring marks (M) are spaced from one another by predetermined mark interval (S0) every time at which the control operation unit (60) periodically outputs the marking instruction (DM); and

an image pickup device (40) that successively picks up images of the measuring marks (M)

**characterized in that**

the image pickup device (40) contains at least two cameras (41, 42) disposed so as to be spaced from each other by an interval substantially equal to the predetermined mark interval (S0) along the length direction of the long object (3) for picking up image information of the adjacent two measuring marks (M),

the measurement control circuit (50) further contains an image processing unit (57) for successively calculating a mark interval calculation value (SOC) corresponding to each mark interval (S0) on the basis of the image information picked up by the two cameras (41, 42) of the image pickup device (40) every time at which the control operation unit (60) outputs the image pickup instruction (DC),

the control operation unit (60) is constructed so as to periodically also outputs a correction coefficient calculating instruction (DK) on the basis of the corrected feed amount measurement value (S3) in the normal operation (NOP),

the control operation unit (60) is also constructed so as to calculate a first feed amount measurement value (S1) of the long object (3) representing an accumulated rotation angle of the measuring roller (20) in the normal operation (NOP) subsequently the initializing instruction (IP) on the basis of the measuring pulses (MP), and to store the first feed amount measurement value $(S1_n)$ representing the accumulated rotation angle of the measuring roller (20) corresponding to a period from the initializing instruction (IP) to the n-th image pickup instruction $(DC_n)$ in the normal operation (NOP) when the n-th image pickup instruction $(DC_n)$ is outputted,

the control operation unit (60) is also constructed so as to simultaneously output the image pickup instruction (DC) to both of the two cameras (41, 42) for simultaneously picking up image information of the adjacent two measuring marks (M), and to calculate a second feed amount measurement value (S2) of the long object (3) representing an accumulation value of the mark interval calculation value (SOC) calculated by the image processing unit (57), wherein the second feed amount measurement value $(S2_n)$ corresponding to the n-th image pickup instruction $(DC_n)$ represents the accumulation value of the mark interval calculation value (SOC) corresponding to the period in the normal operation (NOP),

the control operation unit (60) is also constructed so as to calculate a correction coefficient (k) on the basis of the first and second feed amount measurement values (S1) and (S2) every time at which the correction coefficient calculating instruction (DK) is outputted in the normal operation (NOP), wherein the correction coefficient (k) is continuously obtained in accordance with feeding of the long object (3), and the correction coefficient $(k_n)$ corresponding to the n-th image pickup instruction $(DC_n)$ is calculated by using the first feed amount measurement value $(S1_n)$ corresponding to the period in the normal operation (NOP) and the second feed amount measurement value $(S2_n)$ corresponding to the period in the normal operation (NOP), and

the control operation unit (60) is also constructed so as to calculate the corrected feed amount measurement value (S3) by using the first feed amount measurement value (S1) and the correction coefficient $(k_n)$, so that the corrected feed amount measurement value (S3) is continuously calculated in accordance with feeding of the long object (3).

2. The long-object feed amount measuring apparatus according to claim 1, wherein the control operation unit (60) is constructed so as to calculate a the correction coefficient $(k_n)$ being proportional to a ratio $(S2_n/S1_n)$ of the second feed amount measurement value $(S2_n)$ and the first feed amount measurement value $(S1_n)$ corresponding to the period in the normal operation (NOP), and to multiply the first feed amount measurement value (S1) by the correction coefficient $(k_n)$ for calculating the corrected feed amount measurement value (S3).

3. The long-object feed amount measuring apparatus according to claim 1, wherein the control operation unit (60) controls the image pickup device (40) to simultaneously pick up images of the adjacent two measuring marks (M) located at both the ends of each of the plural mark intervals (S0) at plural times, and the image processing unit (57) calculates plural mark interval calculation values (SOC) corresponding to the respective mark intervals (S0) on the basis of image information picked up simultaneously at plural times by the image pickup device (40), and calculates the second feed amount measurement value (S2) on the basis of the plural mark interval calculation values (S0C).

4. The long-object feed amount measuring apparatus according to claim 1, wherein the image pickup device (40) contains first, second and third cameras (41)(42)(43) disposed along the length direction of the long object (3), the interval between the first and second cameras (41)(42) and the interval between the second and third cameras (42)(43) are set to be equal to each other, the control operation unit (60) controls the image pickup device (40) to simultaneously pick up image information of three measuring marks (M) located at both the ends of respective adjacent two mark intervals (SO), and the image processing unit (57) calculates the adjacent two mark interval calculation values (SOC) on the basis of the three measuring marks (M) and calculates the second feed amount measurement value (S2) on the basis of the two mark interval calculation values (SOC).

5. The long-object feed amount measuring apparatus according to claim 1, wherein the control operation unit (60) controls feed driving means (5) for the long object (3) on the basis of the corrected feed amount measurement value (S3).

6. The long-object feed amount measuring apparatus according to claim 1, further comprising a paint coating device (71) that is disposed at the upstream side of the marking device (30) with respect to the feed direction of the long object (3), and forms paint film (FA) at a surface portion of the long object (3) onto which at least each of the measuring marks (M) is put.

7. The long-object feed amount measuring apparatus according to claim 6, further comprising a paint wiping device (73) that is disposed at the downstream side of the image pickup device (40) with respect to the feed direction of the long object (3) and removes each paint film (FA).

8. The long-object feed amount measuring apparatus according to claim 1, wherein the marking device (30) is designed to be swept at a sweeping speed in a sweeping direction intersecting to the feed direction of the long object (3), and the control operation unit (60) controls the marking device (30) so that one of the sweeping direction and the sweeping speed is changed in accordance with the feeding speed of the long object (3) which is obtained on the basis of the corrected feed amount measurement value (S3).

9. The long-object feed amount measuring apparatus according to claim 1, wherein the marking device (30) is designed to puts a position display mark (MDP) on the long object (3) in addition to the measuring mark (M), and the marking device (30) puts the position display mark (MDP) at a predetermined position of the long object (3) on the basis of the corrected feed amount measurement value (S3).

10. The long-object feed amount measuring apparatus according to claim 9, wherein the long object (3) is designed to be wound as an electrical coil (83), and the position display mark (MDP) is put in accordance with a predetermined winding position of the electrical coil (83).

11. The long-object feed amount measuring apparatus according to claim 1, wherein the marking device (30) is designed to mark feed amount information (IS) on the long object (3), and the marking device (30) marks the feed amount information (IS) on the basis of the corrected feed amount measurement value (S3).

12. The long-object feed amount measuring apparatus according to claim 11, wherein the feed amount information (IS) contains accumulated feed amount information (IS1) from predetermined measuring mark out of the plural measuring marks (M).

13. The long-object feed amount measuring apparatus according to claim 12, wherein the feed amount information (IS) contains the accumulated feed amount information (IS1) and date information representing a date on which the accumulated feed amount (IS1) is given.

14. The long-object feed amount measuring apparatus according to claim 1, further comprising a cutting device (90) that cuts the long object (3) on the basis of the corrected feed amount measurement value (S3).

**Patentansprüche**

1. Langes-Objekt-Zuführungsmenge-Messvorrichtung zum Messen einer Zuführungsmenge eines langen Objekts (3) in einer Langes-Objekt-Zuführungsvorrichtung (1), in welche das lange Objekt (3) in der Längsrichtung desselben zugeführt wird, aufweisend:

eine Messwalze (20), die mit dem langen Objekt (3) in Kontakt steht und auf Basis eines Zuführens des langen Objekts (3) rotiert;

einen rotierenden Kodierer (21), der einen Messimpuls (MP) auf Basis der Rotation der Messwalze (20) sukzessive erzeugt;

eine Messsteuerungsschaltung (50), die eine Steuerungsbetriebseinheit (60) enthält, die einen korrigierten Zuführungsmengenmesswert (S3), der die Zuführungsmenge des langen Objekts (3) darstellt, auf einen Empfang des Messimpulses (MP) hin berechnet, und eine Markierungsanweisung (DM) und eine Bildaufnahmeanweisung (DC) auf Basis des korrigierten Zuführungsmengenmesswerts (S3) in einem Normalbetrieb (NOP) auf eine Initialisierungsanweisung (IP) folgend periodisch ausgibt;

eine Markierungsvorrichtung (30), die eine Vielzahl von Messmarkierungen (M) auf das lange Objekt (3) auf Basis der Markierungsanweisung (DM) jedes Mal, wenn die Steuerungsbetriebseinheit (60) die Markierungsanweisung (DM) periodisch ausgibt, gibt, sodass jede von benachbarten zwei Messmarkierungen (M) unter der Vielzahl von Messmarkierungen (M) um ein vorbestimmtes Markierungsintervall (S0) voneinander beabstandet sind; und

eine Bildaufnahmevorrichtung (40), die Bilder der Messmarkierungen (M) sukzessive aufnimmt,
**dadurch gekennzeichnet, dass**
die Bildaufnahmevorrichtung (40) zumindest zwei Kameras (41,42) enthält, die so angeordnet sind, dass sie um ein Intervall voneinander beabstandet sind, das gleich zu dem vorbestimmten Markierungsintervall (S0) entlang der Längsrichtung des langen Objekts (3) ist, um Bildinformationen der benachbarten zwei Messmarkierungen (M) aufzunehmen,

die Messsteuerungsschaltung (50) ferner eine Bildverarbeitungseinheit (57) zum sukzessiven Berechnen eines Markierungsintervallberechnungswerts (SOC) korrespondierend zu jedem Markierungsintervall (S0) auf Basis der Bildinformationen enthält, die durch die zwei Kameras (41,42) der Bildaufnahmevorrichtung (40) jedes Mal aufgenommen werden, wenn die Steuerungsbetriebseinheit (60) die Bildaufnahmeanweisung (DC) ausgibt,

die Steuerungsbetriebseinheit (60) so konstruiert ist, dass sie auch eine Korrekturkoeffizientenberechnungsanweisung (DK) auf Basis des korrigierten Zuführungsmengenmesswerts (S3) in dem Normalbetrieb (NOP) periodisch ausgibt,

die Steuerungsbetriebseinheit (60) auch so konstruiert ist, dass sie einen ersten Zuführungsmengenmesswert (S1) des langen Objekts (3), der einen akkumulierten Rotationswinkel der Messwalze (20) in dem Normalbetrieb (NOP) darstellt, auf die Initialisierungsanweisung (IP) folgend auf Basis der Messimpulse (MP) berechnet, und den ersten Zuführungsmengenmesswert ($S1_n$), der den akkumulierten Rotationswinkel der Messwalze (20) darstellt, korrespondierend zu einer Dauer von der Initialisierungsanweisung (IP) zu der n-ten Bildaufnahmeanweisung ($DC_n$) in dem Normalbetrieb (NOP) speichert, wenn die n-te Bildaufnahmeanweisung ($DC_n$) ausgegeben wird,

die Steuerungsbetriebseinheit (60) auch so konstruiert ist, dass sie die Bildaufnahmeanweisung (DC) an beide der zwei Kameras (41,42) simultan ausgibt, um Bildinformationen der benachbarten zwei Messmarkierungen (M) simultan aufzunehmen, und einen zweiten Zuführungsmengenmesswert (S2) des langen Objekts (3), der einen Akkumulierungswert des durch die Bildverarbeitungseinheit (57) berechneten Markierungsintervallberechnungswerts (SOC) darstellt, berechnet, wobei der zweite Zuführungsmengenmesswert ($S2_n$) korrespondierend zu der n-ten Bildaufnahmeanweisung ($DC_n$) den Akkumulierungswert des Markierungsintervallberechnungswerts (SOC) korrespondierend zu der Dauer in dem Normalbetrieb (NOP) darstellt,

die Steuerungsbetriebseinheit (60) auch so konstruiert ist, dass sie einen Korrekturkoeffizienten (k) auf Basis der ersten und zweiten Zuführungsmengenmesswerte (S1) und (S2) jedes Mal berechnet, wenn die Korrekturkoeffizientenberechnungsanweisung (DK) in dem Normalbetrieb (NOP) ausgegeben wird, wobei der Korrekturkoeffizient (k) gemäß einem Zuführen des langen Objekts (3) kontinuierlich erhalten wird, und der Korrekturkoeffizient ($k_n$) korrespondierend zu der n-ten Bildaufnahmeanweisung ($DC_n$) unter Verwendung des ersten Zuführungsmengenmesswerts ($S1_n$) korrespondierend zu der Dauer in dem Normalbetrieb (NOP) und des zweiten Zuführungsmengenmesswerts ($S2_n$) korrespondierend zu der Dauer in dem Normalbetrieb (NOP) berechnet wird, und

die Steuerungsbetriebseinheit (60) auch so konstruiert ist, dass sie den korrigierten Zuführungsmengenmesswert (S3) unter Verwendung des ersten Zuführungsmengenmesswerts (S1) und des Korrekturkoeffizienten ($k_n$) berechnet, sodass der korrigierte Zuführungsmengenmesswert (S3) gemäß einem Zuführen des langen Objekts (3) kontinuierlich berechnet wird.

2. Langes-Objekt-Zuführungsmenge-Messvorrichtung nach Anspruch 1, wobei die Steuerungsbetriebseinheit (60) so konstruiert ist, dass sie den Korrekturkoeffizienten ($k_n$), der proportional zu einem Verhältnis ($S2_n/S1_n$) des zweiten Zuführungsmengenmesswerts ($S2_n$) und des ersten Zuführungsmengenmesswerts ($S1_n$) ist, korrespondierend zu der Dauer in dem Normalbetrieb (NOP) berechnet, und den ersten Zuführungsmengenmesswert (S1) mit dem

**EP 2 166 307 B1**

Korrekturkoeffizienten ($k_n$) multipliziert, um den korrigierten Zuführungsmengenmesswert (S3) zu berechnen.

3. Langes-Objekt-Zuführungsmenge-Messvorrichtung nach Anspruch 1, wobei die Steuerungsbetriebseinheit (60) die Bildaufnahmevorrichtung (40) steuert, um Bilder der benachbarten zwei Messmarkierungen (M), die an beiden Enden von jedem der Vielzahl von Markierungsintervallen (S0) angeordnet sind, zu einer Vielzahl von Zeitpunkten simultan aufzunehmen, und die Bildverarbeitungseinheit (57) eine Vielzahl von Markierungsintervallberechnungswerten (SOC) korrespondierend zu den jeweiligen Markierungsintervallen (S0) auf Basis von Bildinformationen, die zu einer Vielzahl von Zeitpunkten durch die Bildaufnahmevorrichtung (40) simultan aufgenommen sind, berechnet, und den zweiten Zuführungsmengenmesswert (S2) auf Basis der Vielzahl von Markierungsintervallberechnungswerten (SOC) berechnet.

4. Langes-Objekt-Zuführungsmenge-Messvorrichtung nach Anspruch 1, wobei die Bildaufnahmevorrichtung (40) erste, zweite und dritte Kameras (41)(42)(43) enthält, die entlang der Längsrichtung des langen Objekts (3) angeordnet sind, wobei das Intervall zwischen den ersten und zweiten Kameras (41)(42) und das Intervall zwischen den zweiten und dritten Kameras (42)(43) eingestellt sind, um gleich zueinander zu sein, die Steuerungsbetriebseinheit (60) die Bildaufnahmevorrichtung (40) steuert, um Bildinformationen von drei Messmarkierungen (M), die an beiden Enden von jeweiligen benachbarten zwei Markierungsintervallen (S0) angeordnet sind, simultan aufzunehmen, und die Bildverarbeitungseinheit (57) die benachbarten zwei Markierungsintervallberechnungswerte (SOC) auf Basis der drei Messmarkierungen (M) berechnet und den zweiten Zuführungsmengenmesswert (S2) auf Basis der zwei Markierungsintervallberechnungswerte (SOC) berechnet.

5. Langes-Objekt-Zuführungsmenge-Messvorrichtung nach Anspruch 1, wobei die Steuerungsbetriebseinheit (60) eine Zuführungsantriebseinrichtung (5) für das lange Objekt (3) auf Basis des korrigierten Zuführungsmengenmesswerts (S3) steuert.

6. Langes-Objekt-Zuführungsmenge-Messvorrichtung nach Anspruch 1, ferner mit einer Farbbedeckungsvorrichtung (71), die an der stromaufwärtigen Seite der Markierungsvorrichtung (30) mit Bezug zu der Zuführungsrichtung des langen Objekts (3) angeordnet ist, und einen Farbfilm (FA) an einem Oberflächenabschnitt des langen Objekts (3), auf welchem zumindest jede der Messmarkierungen (M) gegeben ist, ausbildet.

7. Langes-Objekt-Zuführungsmenge-Messvorrichtung nach Anspruch 6, ferner mit einer Farbwischvorrichtung (73), die an der stromabwärtigen Seite der Bildaufnahmevorrichtung (40) mit Bezug zu der Zuführungsrichtung des langen Objekts (3) angeordnet ist, und jeden Farbfilm (FA) entfernt.

8. Langes-Objekt-Zuführungsmenge-Messvorrichtung nach Anspruch 1, wobei die Markierungsvorrichtung (30) ausgestaltet ist, um mit einer Kehrgeschwindigkeit in einer Kehrrichtung, welche die Zuführungsrichtung des langen Objekts (3) kreuzt, gekehrt zu werden, und die Steuerungsbetriebseinheit (60) die Markierungsvorrichtung (30) steuert, sodass eine der Kehrrichtung und der Kehrgeschwindigkeit gemäß der Zuführungsgeschwindigkeit des langen Objekts (3), welche auf Basis des korrigierten Zuführungsmengenmesswerts (S3) erhalten ist, geändert wird.

9. Langes-Objekt-Zuführungsmenge-Messvorrichtung nach Anspruch 1, wobei die Markierungsvorrichtung (30) ausgestaltet ist, um eine Positionsanzeigemarkierung (MDP) auf das lange Objekt (3) zusätzlich zu der Messmarkierung (M) zu geben, und die Markierungsvorrichtung (30) die Positionsanzeigemarkierung (MDP) an einer vorbestimmten Position des langen Objekts (3) auf Basis des korrigierten Zuführungsmengenmesswerts (S3) gibt.

10. Langes-Objekt-Zuführungsmenge-Messvorrichtung nach Anspruch 9, wobei das lange Objekt (3) ausgestaltet ist, um als eine elektrische Spule (83) gewickelt zu werden, und die Positionsanzeigemarkierung (MDP) gemäß einer vorbestimmten Wicklungsposition der elektrischen Spule (83) gegeben ist.

11. Langes-Objekt-Zuführungsmenge-Messvorrichtung nach Anspruch 1, wobei die Markierungsvorrichtung (30) ausgestaltet ist, um Zuführungsmengeninformationen (IS) auf dem langen Objekt (3) zu markieren, und die Markierungsvorrichtung (30) die Zuführungsmengeninformationen (IS) auf Basis des korrigierten Zuführungsmengenmesswerts (S3) markiert.

12. Langes-Objekt-Zuführungsmenge-Messvorrichtung nach Anspruch 11, wobei die Zuführungsmengeninformationen (IS) akkumulierte Zuführungsmengeninformationen (IS1) von einer vorbestimmten Messmarkierung aus der Vielzahl von Messmarkierungen (M) enthält.

19

**13.** Langes-Objekt-Zuführungsmenge-Messvorrichtung nach Anspruch 12, wobei die Zuführungsmengeninformationen (IS) die akkumulierten Zuführungsmengeninformationen (IS1) und Datumsinformationen, die ein Datum darstellen, an welchem die akkumulierte Zuführungsmenge (IS1) dazu gegeben worden ist, enthalten.

**14.** Langes-Objekt-Zuführungsmenge-Messvorrichtung nach Anspruch 1, ferner mit einer Schneidevorrichtung (90), die das lange Objekt (3) auf Basis des korrigierten Zuführungsmengenmesswerts (S3) schneidet.

**Revendications**

**1.** Appareil de mesure de quantité d'alimentation d'objet long destiné à mesurer une quantité d'alimentation d'un objet long (3) dans un appareil d'alimentation d'objet long (1) dans lequel l'objet long (3) est alimenté dans la direction de sa longueur, comprenant :

un rouleau de mesure (20) qui est en contact avec l'objet long (3) et tourne selon l'alimentation de l'objet long (3) ;
un encodeur rotatif (21) qui génère successivement une impulsion de mesure (MP) selon la rotation du rouleau de mesure (20) ;
un circuit de commande de mesure (50) contient une unité de fonctionnement de commande (60) qui calcule une valeur de mesure de quantité d'alimentation corrigée (S3) représentant la quantité d'alimentation de l'objet long (3) lors de la réception de l'impulsion de mesure (MP), et produit périodiquement une instruction de repérage (DM) et une instruction de collecte d'image (DC) selon la valeur de mesure de quantité d'alimentation corrigée (S3) dans un fonctionnement normal (NOP) ultérieurement à une instruction d'initialisation (IP) ;
un dispositif de repérage (30) qui met plusieurs repères de mesure (M) sur l'objet long (3) selon l'instruction de repérage (DM) de sorte que chaque deux repères de mesure adjacents (M) parmi les plusieurs repères de mesure (M) sont espacés les uns des autres d'un intervalle de repère prédéterminé (S0) chaque fois que l'unité de fonctionnement de commande (60) produit périodiquement l'instruction de repérage (DM) ; et
un dispositif de collecte d'image (40) qui collecte successivement des images des repères de mesure (M)
**caractérisé en ce que**
le dispositif de collecte d'image (40) contient au moins deux caméras (41, 42) disposées de manière à être espacées l'une de l'autre d'un intervalle sensiblement égal à l'intervalle de repère prédéterminé (S0) suivant la direction de la longueur de l'objet long (3) pour collecter des informations d'image des deux repères de mesure adjacents (M),
le circuit de commande de mesure (50) contient en outre une unité de traitement d'image (57) destinée à calculer successivement une valeur de calcul d'intervalle de repère (SOC) correspondant à chaque intervalle de repère (S0) selon les informations d'image collectées par les deux caméras (41, 42) du dispositif de collecte d'image (40) chaque fois que l'unité de fonctionnement de commande (60) produit l'instruction de collecte d'image (DC),
l'unité de fonctionnement de commande (60) est construite de manière à produire également périodiquement une instruction de calcul de coefficient de correction (DK) selon la valeur de mesure de quantité d'alimentation corrigée (S3) dans le fonctionnement normal (NOP),
l'unité de fonctionnement de commande (60) est également construite de manière à calculer une première valeur de mesure de quantité d'alimentation (S1) de l'objet long (3) représentant un angle de rotation accumulé du rouleau de mesure (20) dans le fonctionnement normal (NOP) ultérieurement à l'instruction d'initialisation (IP) selon les impulsions de mesure (MP), et pour stocker la première valeur de mesure de quantité d'alimentation ($S1_n$) représentant l'angle de rotation accumulé du rouleau de mesure (20) correspondant à une période allant de l'instruction d'initialisation (IP) à la $n^{ième}$ instruction de collecte d'image ($DC_n$) dans le fonctionnement normal (NOP) lorsque la $n^{ième}$ instruction de collecte d'image ($DC_n$) est produite,
l'unité de fonctionnement de commande (60) est également construite de manière à produire simultanément l'instruction de collecte d'image (DC) à destination des deux caméras (41, 42) pour collecter simultanément des informations d'image des deux repères de mesure adjacents (M), et pour calculer une seconde valeur de mesure de quantité d'alimentation (S2) de l'objet long (3) représentant une valeur d'accumulation de la valeur de calcul d'intervalle de repère (SOC) calculée par l'unité de traitement d'image (57), dans lequel la seconde valeur de mesure de quantité d'alimentation ($S2_n$) correspondant à la $n^{ième}$ instruction de collecte d'image ($DC_n$) représente la valeur d'accumulation de la valeur de calcul d'intervalle de repère (SOC) correspondant à la période dans le fonctionnement normal (NOP),
l'unité de fonctionnement de commande (60) est également construite de manière à calculer un coefficient de correction (k) selon les première et seconde valeurs de mesure de quantité d'alimentation (S1) et (S2) à chaque fois que l'instruction de calcul de coefficient de correction (DK) est produite dans le fonctionnement normal (NOP), dans lequel le coefficient de correction (k) est obtenu continuellement en conformité avec l'alimentation de l'objet long (3), et le coefficient de correction ($k_n$) correspondant à la $n^{ième}$ instruction de collecte d'image ($DC_n$) est calculé par l'utilisation de la première valeur de mesure de quantité d'alimentation ($S1_n$) correspondant à la période dans le fonctionnement normal (NOP) et la seconde valeur de mesure de quantité d'alimentation ($S2_n$) correspondant à la période dans le fonctionnement normal (NOP), et

l'unité de fonctionnement de commande (60) est également construite de manière à calculer la valeur de mesure de quantité d'alimentation corrigée (S3) par l'utilisation de la première valeur de mesure de quantité d'alimentation (S1) et le coefficient de correction ($k_n$), de sorte que la valeur de mesure de quantité d'alimentation corrigée (S3) est calculée continuellement en conformité avec l'alimentation de l'objet long (3).

2. Appareil de mesure de quantité d'alimentation d'objet long selon la revendication 1, dans lequel l'unité de fonctionnement de commande (60) est construite de manière à calculer le coefficient de correction ($k_n$) qui est proportionnel à un rapport ($S2_n/S1_n$) de la seconde valeur de mesure de quantité d'alimentation ($S2_n$) et de la première valeur de mesure de quantité d'alimentation ($S1_n$) correspondant à la période dans le fonctionnement normal (NOP), et à multiplier la première valeur de mesure de quantité d'alimentation (S1) par le coefficient de correction ($k_n$) pour calculer la valeur de mesure de quantité d'alimentation corrigée (S3).

3. Appareil de mesure de quantité d'alimentation d'objet long selon la revendication 1, dans lequel l'unité de fonctionnement de commande (60) commande le dispositif de collecte d'image (40) pour collecter simultanément des images des deux repères de mesure adjacents (M) situés aux deux extrémités de chacun des plusieurs intervalles de repère (S0) en plusieurs instants, et l'unité de traitement d'image (57) calcule plusieurs valeurs de calcul d'intervalle de repère (SOC) correspondant aux intervalles de repère (S0) respectifs selon des informations d'image collectées simultanément en plusieurs instants par le dispositif de collecte d'image (40), et calcule la seconde valeur de mesure de quantité d'alimentation (S2) selon les plusieurs valeurs de calcul d'intervalle de repère (SOC).

4. Appareil de mesure de quantité d'alimentation d'objet long selon la revendication 1, dans lequel le dispositif de collecte d'image (40) contient des première, deuxième et troisième caméras (41) (42) (43) disposées suivant la direction de la longueur de l'objet long (3), l'intervalle entre les première et deuxième caméras (41) (42) et l'intervalle entre les deuxième et troisième caméras (42)(43) sont fixés égaux l'un à l'autre, l'unité de fonctionnement de commande (60) commande le dispositif de collecte d'image (40) pour collecter simultanément des informations d'image de trois repères de mesure (M) situés aux deux extrémités de deux intervalles de repère adjacents (S0) respectifs, et l'unité de traitement d'image (57) calcule les deux valeurs de calcul d'intervalle de repère adjacent (SOC) selon les trois repères de mesure (M) et calcule la seconde valeur de mesure de quantité d'alimentation (S2) selon les deux valeurs de calcul d'intervalle de repère (SOC).

5. Appareil de mesure de quantité d'alimentation d'objet long selon la revendication 1, dans lequel l'unité de fonctionnement de commande (60) commande des moyens d'entraînement d'alimentation (5) pour l'objet long (3) selon la valeur de mesure de quantité d'alimentation corrigée (S3).

6. Appareil de mesure de quantité d'alimentation d'objet long selon la revendication 1, comprenant en outre un dispositif de revêtement de peinture (71) qui est disposé du côté amont du dispositif de repérage (30) par rapport à la direction d'alimentation de l'objet long (3), et forme un film de peinture (FA) à une portion de surface de l'objet long (3) sur laquelle au moins chacun des repères de mesure (M) est mis.

7. Appareil de mesure de quantité d'alimentation d'objet long selon la revendication 6, comprenant en outre un dispositif d'essuyage de peinture (73) qui est disposé du côté aval du dispositif de collecte d'image (40) par rapport à la direction d'alimentation de l'objet long (3) et enlève chaque film de peinture (FA).

8. Appareil de mesure de quantité d'alimentation d'objet long selon la revendication 1, dans lequel le dispositif de repérage (30) est conçu pour être balayé à une vitesse de balayage dans une direction de balayage coupant la direction d'alimentation de l'objet long (3), et l'unité de fonctionnement de commande (60) commande le dispositif de repérage (30) de sorte que l'une de la direction de balayage et de la vitesse de balayage est changée en conformité avec la vitesse d'alimentation de l'objet long (3) qui est obtenu selon la valeur de mesure de quantité d'alimentation corrigée (S3).

9. Appareil de mesure de quantité d'alimentation d'objet long selon la revendication 1, dans lequel le dispositif de repérage (30) est conçu pour mettre un repère d'affichage de position (MDP) sur l'objet long (3) en plus du repère de mesure (M), et le dispositif de repérage (30) met le repère d'affichage de position (MDP) en une position prédéterminée de l'objet long (3) selon la valeur de mesure de quantité d'alimentation corrigée (S3).

**10.** Appareil de mesure de quantité d'alimentation d'objet long selon la revendication 9, dans lequel l'objet long (3) est conçu pour être enroulé comme une bobine électrique (83), et le repère d'affichage de position (MDP) est mis en conformité avec une position d'enroulement prédéterminée de la bobine électrique (83).

**11.** Appareil de mesure de quantité d'alimentation d'objet long selon la revendication 1, dans lequel le dispositif de repérage (30) est conçu pour repérer des informations de quantité d'alimentation (IS) sur l'objet long (3), et le dispositif de repérage (30) repère les informations de quantité d'alimentation (IS) selon la valeur de mesure de quantité d'alimentation corrigée (S3).

**12.** Appareil de mesure de quantité d'alimentation d'objet long selon la revendication 11, dans lequel les informations de quantité d'alimentation (IS) contiennent des informations de quantité d'alimentation accumulée (IS1) à partir d'un repère de mesure prédéterminé parmi les plusieurs repères de mesure (M).

**13.** Appareil de mesure de quantité d'alimentation d'objet long selon la revendication 12, dans lequel les informations de quantité d'alimentation (IS) contiennent les informations de quantité d'alimentation accumulée (IS1) et des informations de date représentant une date à laquelle la quantité d'alimentation accumulée (IS1) est donnée.

**14.** Appareil de mesure de quantité d'alimentation d'objet long selon la revendication 1, comprenant en outre un dispositif de coupe (90) qui coupe l'objet long (3) selon la valeur de mesure de quantité d'alimentation corrigée (S3).

[FIG. 1]

[FIG. 2]

[FIG. 3]

(a) MARKING INSTRUCTION DM

(b) IMAGE PICKUP INSTRUCTION DC

(c) CORRECTION COEFFICIENT CALCULATING INSTRUCTION DK

TIME

[FIG. 4]

(a)

(b)

(c)

[FIG. 5]

(a)

(b)

[FIG. 6]

(a) FIRST FEED AMOUNT MEASUREMENT VALUE S1

(b) CORRECTION COEFFICIENT k

(c) CORRECTED FEED AMOUNT MEASUREMENT VALUE S3

[FIG. 7]

[FIG. 8]

(a)

(b)

(c)

[FIG. 9]

[FIG. 10]

EP 2 166 307 B1

[FIG. 11]

[FIG. 12]

(a)

(b)

31

[FIG. 13]

[FIG. 14]

CONTROLLER

CONTROL
OPERATION UNIT

DMI ↓  ↓ DM

53

60

~10E

~30

3

2500.3  M ┤ ⎯ Mn

ISn      IS1n

[FIG. 15]

7

91

MOTOR

↑ DO

MOTOR

90

3

10F

9k

9l

9m

9n

**EP 2 166 307 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 4188008 A
- US 5430665 A
- JP 2912050 B
- US 4400882 A
- US 20030009894 A
- JP 54153060 B
- JP 56117101 B